# EUROPÄISCHE PATENTSCHRIFT

(11) **EP 0 890 612 B1**
(45) Veröffentlichungstag und Bekanntmachung des Hinweises auf die Patenterteilung: **04.05.2005**
(21) Anmeldenummer: 98112009.0
(22) Anmeldetag: 29.06.1998
(51) Int. Cl.: C08L 23/10

(54) **Polyolefinformteile verbesserter Wärmeformbeständigkeit und Steifigkeit**
Polyolefin molded parts of improved stiffness and heat resistance
Objets moulés de polyoléfines à rigidité et résistance à la chaleur améliorée

(30) Priorität: 09.07.1997 DE 19729231; 14.02.1998 DE 19806105
(43) Veröffentlichungstag der Anmeldung: 13.01.1999
(73) Patentinhaber: Borealis GmbH, 2323 Schwechat-Mannswörth (AT)
(72) Erfinder: Rätzsch, Manfred, Prof. Dr., 4202 Kirchschlag (AT); Hesse, Achim, Dr., 4021 Linz (AT); Reichelt, Norbert, Dr., 4501 Neuhofen (AT); Panzer, Ulf, Dr., 4320 Perg (AT); Gahleitner, Markus, Dr., 4501 Neuhofen/Krems (AT); Wachholder, Max, Ing., 4310 Mauthausen (AT); Kloimstein, Karl, Ing., 4600 Wels (AT)
(74) Vertreter: VA TECH Patente GmbH & Co

(56) Entgegenhaltungen:
- EP-A- 0 412 518
- EP-A- 0 562 582
- EP-A- 0 634 454
- EP-A- 0 646 622
- EP-A- 0 688 817
- EP-A- 0 717 076
- US-A- 5 264 174

## Beschreibung

Die Erfindung betrifft durch Blasformen oder Spritzgießen hergestellte Polyolefinformteile verbesserter Wärmeformbeständigkeit und Steifigkeit aus Gemischen aus nichtmodifizierten Polypropylenpolymeren und modifizierten Propylenpolymeren, die für den Einsatz in der Verpackungsindustrie, in der Haushaltsgeräteindustrie, im Labor- und Krankenhausbedarf, für Garten- und Landwirtschaftsgeräte, Transportbehälter sowie für Bauteile in der Automobilindustrie, Bauteile von Maschinen, Elektrogeräten und Elektronikgeräten geeignet sind. Weiterhin betrifft die Erfindung ein Verfahren zur Herstellung dieser Polyolefinformteile.

Durch Blasformen oder Spritzgießen hergestellte Polyolefinformteile sind bekannt.

Die Herstellung blasgeformter Polyolefinformteile aus Polyethylen besitzt gegenüber der Herstellung blasgeformter Teile aus Polypropylen den Vorteil, daß sich aus Polyethylen ebenfalls großvolumige Teile herstellen lassen. Von Nachteil bei blasgeformten Teilen aus Polyethylen ist deren niedrige Wärmeformbeständigkeit, Steifigkeit, Spannungsrißbeständigkeit, Transparenz und Oberflächenhärte.

Blasgeformte Teile aus Polypropylen in Form von Flaschen, Abdeckungen, Stutzen, Dosen und kleinvolumigen Behältern sind bekannt ["Blasformen von Polypropylen", VDI-Verlag Düsseldorf 1980; Modern Plastics Intern. (1996)5, 55-57; Neißl, W., Kunststoffe 82(1992)2, 140-142].

Bekannt sind ebenfalls Polypropylenblends mit Talkum oder Glasfasern zur weiteren Erhöhung der Steifigkeit und Wärmeformbeständigkeit der blasgeformten Teile und Polypropylenblends mit Elastomeren zur Erhöhung der Kälteschlagzähigkeit der blasgeformten Teile [Lee, N., "Plastic blow molding handbook", Van Norstrand Reinhold Verl. , New York 1990, S. 391-395].

Der Nachteil von blasgeformten Teile aus Polypropylen besteht in der zunehmend ungleichmäßigeren Wanddickenverteilung mit wachsendem Volumen der blasgeformten Teile. Großvolumige Teile aus Polypropylen sind im Gegensatz zu Polyethylen nicht herstellbar.

Bekannte Herstellungsverfahren für blasgeformte Polyolefinformteile sind das Extrusionsblasformen, Extrusionsstreckblasformen, Spritzblasformen und Spritzstreckblasformen (Lee, N., Plastic blow molding handbook", Van Norstrand Reinhold Verl., New York 1990; Rosato, D., Blow molding handbook", Carl-Hanser-Verlag München 1989).

Das Extrusionsblasformen stellt einen zweistufigen Prozeß dar, bei dem in der ersten Stufe ein Schlauch als Vorformling hergestellt wird, der in der zweiten Stufe in einer taktweise arbeitenden Blasstation in einem geteilten Werkzeug unter Aufblasen zum Hohlkörper umgeformt wird.

Das Extrusionsstreckblasformen ist eine Variante des Extrusionsblasformens, bei der der vorgeformte Hohlkörper in einer weiteren Verfahrensstufe in einer Blasstation einer Längsverstreckung durch einen Streckstempel und einer radialen Verstreckung durch Blasluft unterzogen wird.

Beim Spritzblasformen erfolgt die Herstellung des Hohlkörper-Vorformlings durch Spritzguß. Die Vorformlinge werden entweder diskontinuierlich einer separaten Blasformanlage zugeführt und ausgeformt oder bei Spritzblasform-Mehrstationenanlagen durch einen Drehteller dem Blaswerkzeug und nach Ausformung dem Auswerfer zugeführt. Beim Spritzstreckblasformen als Variante des Spritzblasformens erfolgt in der Blasstation eine zusätzliche Längsverstreckung durch einen Streckstempel im Ausformvorgang.

Bekannte Verfahren zur Erhöhung der Steifigkeit von durch Spritzgießen hergestellten Polyolefinformteilen auf Basis von Polypropylen sind der Einsatz von Polypropylenblends mit Füllstoffen wie Talkum [Grolik, W., Kunststoffe 80(1990)3, 342-347] oder Wollastonit [Pääkönen, E., Kunststoffe 77(1987)6, 602-606] oder von Polypropylenblends mit Glasfasern [Zettler, M., Kunststoffe 79(1989)9, 797-803].

Weiterhin ist bekannt, die Steifigkeit von Polypropylen-Spritzgußformteilen durch den Einsatz von Nukleierungsmitteln wie Natriumbenzoat oder Sorbitolderivaten zu erhöhen [Pukansky,B., ANTEC'96, 2317-2321].

Von Nachteil bei dem Einsatz von Füllstoffen, Glasfasern oder Nukleierungsmitteln zur Erhöhung der Steifigkeit von Polyolefin-Spritzgußformteilen ist der gleichzeitige Abfall der Schlagzähigkeit der Spritzgußformteile.

Bekannt ist ebenfalls, die Zähigkeit von Talkum-gefülltem Polypropylen durch Zusatz von Ethylen-Propylen-Elastomeren [Pukanszky, B., Polymer Engineering and Science 35(1995)24, 1962-1971] und von Glasfaser-verstärktem Polypropylen durch Akrylsäure-modifizierte Ethylen-Propylen-Elastomere [ Kelnar, I., Angew Makromolekulare Chem. 189(1991), 207-218] zu verbessern.

Der Elastomerzusatz ist jedoch mit einer Einbuße an Steifigkeit und Wärmeformbeständigkeit verbunden, so daß ein ausgewogenes Eigenschaftsprofil Steifigkeit/Wärmeformbeständigkeit für Spritzgußformteile hoher Beanspruchung durch diese Maßnahmen nicht erzielbar ist.

Schließlich sind steife und zähe Spritzgußformteile auf Basis von Mischungen aus Propylen-Ethylen-Blockcopolymeren und Ethylen-Propylen-Elastomeren bekannt (JP 9703295, JP 9703298). Bei diesen Reaktorblends ist jedoch das Steifigkeitsniveau unbefriedigend.

Ziel der Erfindung sind durch Blasformen oder Spritzgießen hergestellte Polyolefinformteile verbesserter Wärmeformbeständigkeit und Steifigkeit, die die Nachteile bekannter Rezepturen vermeiden.

Die Lösung der erfindungsgemäßen Aufgabe bilden durch Blasformen oder Spritzgießen hergestellte Polyolefinformteile verbesserter Wärmeformbeständigkeit und Steifigkeit aus 60 bis 99,9 Masse%, bevorzugt 75 bis 98 Masse%, nichtmodifizierten Polypropylenpolymeren A und 40 bis 0,1 Masse%, bevorzugt 25 bis 2 Masse%, modifizierten Propylenpolymeren B.

Die in den Polyolefinformteilen enthaltenen nichtmodifizierten Propylenpolymere A bestehen aus:
A1) üblichen Propylenpolymeren, bevorzugt unter Anwendung von Ziegler-Natta-Katalysatoren oder Metallocenkatalysatoren hergestellten Propylenhomopolymeren, insbesondere mit einem M_{w}/Mₙ-Verhältnis von 2 bis 4,5, und/oder Copolymeren aus Propylen, Ethylen und/oder α-Olefinen mit 4 bis 18 C-Atomen mit einem Propylengehalt von 80,0 bis 99,9 Masse% in Form von statistischen Copolymeren, Blockcopolymeren und/oder statistischen Blockcopolymeren, mit Schmelzindices von 0,1 bis 300 g/10 min bei 230°C/2, 16 kg, bevorzugt 1 bis 100 g/10 min bei 230°C/2,16 kg, und/oder
A2) einer Polyolefinmischung mit einem M_{w}/Mₙ-Verhältnis von 2 bis 6 und einem Schmelzindex von 1 bis 40 g/10 min bei 230°C/2,16 kp, die aus
   A2.1) 60 bis 98 Masse% eines kristallinen Copolymeren aus 85 bis 99,5 Masse% Propylen und 15 bis 0,5 Masse% Ethylen und/oder einem α-Olefin der allgemeinen Formel CH₂=CHR, wobei R ein linearer oder verzweigter Alkylrest mit 2 bis 8 Kohlenstoffatomen ist,
   A2.2) 2 bis 40 Masse% eines elastischen Copolymers aus 20 bis 70 Masse% Ethylen und 80 bis 30 Masse% Propylen und/oder einem α-Olefin der allgemeinen Formel CH₂=CHR, wobei R ein linearer oder verzweigter Alkylrest mit 2 bis 8 Kohlenstoffatomen ist, besteht und/oder

A3) weitgehend amorphen Polypropylenen oder Propylen-Copolymeren mit einem Anteil an kristallinem Polypropylen bzw. kristallinem Propylen-Copolymer unter 10 Masse% mit einer Schmelzenthalpie unter 40 J/g und einem Schmelzindex von 0,1 bis 100 g/10 min bei 230°C/2,16 kg, wobei das weitgehend amorphe Polypropylen ein Homopolymer des Propylens und/oder ein Copolymer des Propylens aus mindestens 80 Mol % Propylen und höchstens 20 Mol % eines oder mehrerer α-Olefine der allgemeinen Formel CH₂=CHR ist, wobei R ein linearer oder verzweigter Alkylrest mit 2 bis 8 Kohlenstoffatomen ist.

Die als Komponente A2) in den erfindungsgemäßen Polyolefinformteilen gegebenenfalls enthaltenen Polyolefinmischungen aus kristallinen Copolymeren und elastischen Copolymeren sind beispielsweise die in EP 400 333 oder EP 472 946 beschriebenen Polymermischungen.

Die als Komponente A3) in den erfindungsgemäßen Polyolefinformteilen gegebenenfalls enthaltenen weitgehend amorphen Polypropylene oder Propylen-Copolymere sind insbesondere Stereoblock-Polypropylene, die beispielsweise unter Anwendung hochaktiver, Metalloxid-fixierter Ziegler-Natta-Katalysatoren [Collette, J., Macromolecules 22 (1989), 3851-3858; DE 2830160] oder löslicher Ziegler-Natta-Katalysatoren [de Candia, F., Makromol. Chem. 189 (1988), 815-821], gegebenenfalls unter nachfolgender Reaktivmodifizierung ( EP 0 636 863) und/oder Degradation (EP 0 640 850), hergestellt werden.

Besonders bevorzugt werden Polyolefinformteile, die neben den modifizierten Propylenpolymeren B) mehrere der nichtmodifizierten Propylenpolymere A1) bis A3) enthalten. Die Kälteschlagzähigkeit der erfindungsgemäßen Polyolefinformteile nehmen mit wachsendem Gehalt der Komponenten A2) und A3) in den Polyolefinformteilen zu. Polyolefinformteile mit einer hohen Steifigkeit und Oberflächenhärte enthalten hohe Anteile der Komponenten A1) und B).

In den nichtmodifizierten Propylenpolymeren A1) bis A3) können 0,01 bis 2,5 Masse% Stabilisatoren, 0,01 bis 5 Masse% Verarbeitungshilfsmittel, 0,1 bis 1 Masse% Antistatika, 0,2 bis 3 Masse% Pigmente, 0,05 bis 1 Masse% Nukleierungsmittel, 2 bis 20 Masse% Flammschutzmittel, jeweils bezogen auf die Summe der nichtmodifizierten Propylenpolymere A, als Hilfsstoffe, und/oder 3 bis 40 Masse%, bezogen auf die Summe der nichtmodifizierten Propylenpolymere A, anorganische und/oder organische Füll- und/oder Verstärkungsstoffe enthalten sein.

Die in den erfindungsgemäßen Polyolefinformteilen enthaltenen Stabilisatoren sind bevorzugt Mischungen aus 0,01 bis 0,6 Masse% phenolischen Antioxidantien, 0,01 bis 0,6 Masse% 3-Arylbenzofuranonen, 0,01 bis 0,6 Masse% Verarbeitungsstabilisatoren auf Basis von Phosphiten , 0,01 bis 0,6 Masse% Hochtemperaturstabilisatoren auf Basis von Disulfiden und Thioäthern und/oder 0,01 bis 0,8 Masse% sterisch gehinderten Aminen (HALS).

Geeignete phenolische Antioxidantien sind 2-tert.Butyl-4,6-dimethylphenol, 2,6-Ditert.butyl-4-methylphenol, 2,6-Di-tert.butyl-4-isoamylphenol, 2,6,-Di-tert.butyl-4-ethylphenol, 2-tert.Butyl-4,6-diisopropylphenol, 2,6-Dicyclopentyl-4-methylphenol, 2,6-Di-tert.-butyl-4-methoxymethylphenol, 2-tert.Butyl-4,6-dioctadecylphenol, 2,5-Di-tert.butylhydrochinon, 2,6-Di-tert.butyl-4,4-hexadecyloxyphenol, 2,2'-Methylenbis(6-tert.butyl-4-methylphenol), 4,4'-Thio-bis-(6-tert.butyl-2-methylphenol). 3(3,5-Ditert.butyl - 4 - hydroxyphenyl)propionsäureoctadecylester, 1,3,5 - Trimethyl - 2,4,6-tris(3',5'di-tert.butyl-4-hydroxybenzyl)benzen und/oder Pentaerythritol-tetrakis[3-(3,5-di-tert.butyl-4-hydroxyphenyl)]propionat.

Als Benzofuranonderivat ist insbesondere 5,7-Di-tert.butyl-3-(3,4-di-methylphenyl)-3H-benzofuran-2-on geeignet.

Als HALS-Verbindungen sind Bis-2,2,6,6 tetramethyl-4-piperidylsebazat und/oder Poly - ([1,1,3,3,-tetramethylbutyl)-imino] - 1,3,5- triazin - 2,4,diyl)[2,2,6,6-tetramethylpiperidyl)-amino]-hexamethylen-4-(2,2,6,6-tetra-methyl)piperidyl)-imino] besonders geeignet.

Die in den erfindungsgemäßen Polyolefinformteilen gegebenenfalls enthaltenen Nukleierungsmittel sind bevorzugt α-Nukleierungsmittel wie Talkum, Natriumbenzoat oder das Natriumsalz der Methylen-bis(2,4-di-tert.bu-tylphenol)phosphorsäure oder β-Hukleierungsmittel wie Adipinsäure, Adipinsäuredianilid, Chinacridinonchinon und/oder N,N'-Dicyclododecyl-4,4-biphenyldicarboxamid.

Die in den erfindungsgemäßen Polyolefinformteilen gegebenenfalls enthaltenen Füllstoffe sind bevorzugt Al₂O_{3,} Al(OH)_{3,} Bariumsulfat, Calciumcarbonat, Glaskugeln, Holzmehl, Kieselerde, Mikrohohlkugeln, Ruß, Talkum und/oder Wollastonit.

Die in den erfindungsgemäßen Polyolefinformteilen gegebenenfalls enthaltenen Verstärkerstoffe sind bevorzugt Aramidfasern, Cellulosefasern, Flachs, Jute, Kenaf, Glasfasern, Glasmatten, Mikrofasern aus flüssigkristallinen Polymeren und/oder Polytetrafluorethylen-Fasern.

Als Verarbeitungshilfsmittel können die erfindungsgemäßen Polyolefinformteile Calciumstearat, Magnesiumstearat und/oder Wachse enthalten.

Die in den Polyolefinformteilen enthaltenen modifizierten Propylenpolymere B sind erfindungsgemäß modifizierte Propylenhomopolymere und/oder Propylencopolymere mit Schmelzindices von 0,05 bis 40 g/10 min bei 230°C/2,16 kg, bevorzugt 0,25 bis 15 g/10 min bei 230°C/2,16 kg und einem Quotienten aus der Grenzviscosität des modifizierten Propylenpolymers B und der Grenzviscosität des zugrundeliegenden nichtmodifizierten Propylenpolymers mit weitgehend gleichem Molmassen-Gewichtsmittel von 0,20 bis 0,95, wobei seitens des Syntheseverfahrens folgende modifizierten Propylenpolymere B erfindungsgemäß geeignet sind :
B1) modifizierte Propylenpolymere, die durch Behandlung von Propylenhomopolymeren und/oder Copolymeren aus Propylen und Ethylen bzw. α-Olefinen mit 4 bis 18 C-Atomen sowie von Mischungen der genannten Polypropylene
   - mit mehrfunktionell ethylenisch ungesättigten Monomeren und
   - mit ionisierender Strahlung bzw. thermisch zerfallenden Radikalbildnern hergestellt wurden,
   und/oder
B2) modifizierte Propylenpolymere, die durch Umsetzung von Säure- und/oder Säureanhydridgruppen enthaltenden Polypropylenen, mit C₂₋ bis C₁₆ - Diaminen und/oder C₂ bis C₁₆ - Diolen, hergestellt wurden,
   und/oder
B3) modifizierte Propylenpolymere, die durch hydrolytische Kondensation von Polypropylenen, die hydrolysierbare Silangruppen enthalten, hergestellt wurden.

Beispiele für die gegebenenfalls in den erfindungsgemäßen Polyolefinformteilen enthaltenen modifizierten Propylenpolymere B1) sind insbesondere :
- modifizierte Polypropylene durch Behandlung von Polypropylenen mit mehrfunktionell ethylenisch ungesättigten Monomeren unter Einwirkung ionisierender Strahlung (EP 678527),
- modifizierte Polypropylene durch Behandlung von Polypropylenen mit mehrfunktionell ethylenisch ungesättigten Monomeren in Gegenwart von Peroxiden in der Schmelze (EP 688817; EP 450342).

Beispiele für die durch polymeranaloge Umsetzungen erzeugten, in den erfindungsgemäßen Polyolefinformteilen gegebenenfalls enthaltenen modifizierten Propylenpolymere B2) sind insbesondere :
- modifizierte Polypropylene durch Umsetzung von Maleinsäureanhydridgepfropftem Polypropylen mit Diaminen oder Polyglycolen (EP 177401; JP 08 176 365),

Beispiele für die in den erfindungsgemäßen Polyolefinformteilen gegebenenfalls enthaltenen modifizierten Propylenpolymere B3), die durch hydrolytische Kondensation von Polypropylenen, die hydrolysierbare Silangruppen enthalten, hergestellt werden, bilden die in DE 41 07 635 oder US 47 14 716 beschriebenen Produkte.

Eine besonders bevorzugte Variante für die in den erfindungsgemäßen Polyolefinformteilen gegebenenfalls enthaltenen, durch Behandlung von Propylen-Homopolymeren und/oder Copolymeren aus Propylen und Ethylen bzw. α-Olefinen mit 4 bis 18 C-Atomen sowie von Mischungen der genannten Polypropylene mit mehrfunktionell ethylenisch ungesättigten Monomeren und thermisch zerfallenden Radikalbildnern erzeugten modifizierten Propylenpolymere B1 sind modifizierte Propylenpolymere, die nach einem kontinuierlichen Verfahren hergestellt worden sind, bei dem
1) Polypropylenpartikel in Form von Pulvern, Granulaten oder Grießen mit einer bevorzugten Korngröße im Bereich von 0,001 bis 7 mm, die aus
   1.1) Propylen-Homopolymeren, insbesondere aus Propylen-Homopolymeren mit bimodaler Molmassenverteilung, Molmassen-Gewichtsmitteln M_{w} von 500000 bis 1500000 g/mol, Molmassen-Zahlenmitteln Mₙ von 25000 bis 100000 g/mol und M_{w} /-Mₙ -Werten von 5 bis 60, die in einer Reaktorkaskade unter Einsatz von Ziegler-Natta-Katalysatoren oder Metallocenkatalysatoren hergestellt wurden, und/oder aus
   1.2) Copolymeren aus Propylen und Ethylen bzw. α-Olefinen mit 4 bis 18 C-Atomen, bevorzugt aus statistischen Propylen-Copolymeren, Propylen-Blockcopolymeren, statistischen Propylen-Blockcopolymeren und/oder elastomeren Polypropylenen, oder aus Mischungen der genannten modifizierten Polypropylene, bestehen,
   in einem kontinuierlichen Mischer mit 0,05 bis 3 Masse%, bezogen auf die eingesetzten Polypropylene, an Acylperoxiden, Alkylperoxiden, Hydroperoxiden Peroxycarbonaten und/oder Perestern als thermisch zerfallende Radikalbildner, deren thermischer Zerfall bevorzugt unterhalb 210°C abgeschlossen ist und die gegebenenfalls mit inerten Lösungsmitteln verdünnt sind, unter Erwärmung auf 30 bis 100°C, bevorzugt auf 70 bis 90°C, gemischt worden sind,
2) leichtflüchtige bifunktionelle Monomere, insbesondere C₄- bis C₁₀- Diene und/oder C₇- bis C₁₀- Divinylverbindungen, durch die Polypropylenpartikel aus der Gasphase, bevorzugt in kontinuierlichen Durchflußmischern als kontinuierliche Gas-Feststoff-Absorber, bei einer Temperatur T von 20°C bis 120°C, vorzugsweise von 60 bis 100°C, und einer mittleren Sorptionszeit von τₛ von 10s bis 1000 s, bevorzugt 60 s bis 600 s, sorbiert worden sind, wobei in den Polypropylenpartikeln der Anteil der bifunktionell ungesättigten Monomeren 0.01 bis 10 Masse%, bevorzugt 0,05 bis 2 Masse%, bezogen auf die eingesetzten Polypropylene, beträgt, nachfolgend
3) die Polypropylenpartikel, in denen die Acylperoxide, Alkylperoxide, Hydroperoxide, Peroxycarbonate und/oder Perester als thermisch zerfallende Radikalbildner und die bifunktionell ungesättigten Monomere sorbiert worden sind, unter einer Atmosphäre aus Inertgas und diesen leichtflüchtigen bifunktionellen Monomeren bei 110°C bis 210°C in kontinuierlich arbeitenden Knetern oder Extrudern, vorzugsweise in Doppelschneckenextrudern, aufgeschmolzen worden sind und die thermisch zerfallenden Radikalbildner dabei zersetzt worden sind,
4) die Schmelze danach auf 220°C bis 300°C erwärmt worden ist, wobei nichtumgesetzte Monomere und Zerfallsprodukte entfernt worden sind, und
5) die Schmelze in an sich bekannter Weise granuliert worden ist,
und bei dem vor dem Verfahrensschritt 1) und/oder 5) und /oder vor bzw. während des Verfahrensschrittes 3) und/oder 4) als weitere Hilfsstoffe 0,01 bis 2,5 Masse% Stabilisatoren, 0,1 bis 1 Masse% Antistatika, 0,2 bis 3 Masse% Pigmente, 0,05 bis 1 Masse% Nukleierungsmittel und/oder 0,01 bis 5 Masse% Verarbeitungshilfsmittel, bezogen auf das eingesetzte Polypropylen, zugesetzt worden sind.

Besonders bevorzugt enthalten die erfindungsgemäßen Polyolefinformteile als modifizierte Propylenpolymere B modifizierte Propylenpolymere mit einem Molmassen-Gewichtsmittel von 350 bis 1500 kg/mol und einer Gleichgewichtskomplianz Jₑ₀ von 1,2 bis 12 Pa⁻¹.

Ein weiterer Vorzug der erfindungsgemäßen Polyolefinformteile besteht in ihrer erhöhten Kristallisationstemperatur.

Die durch Blasformen hergestellten Polyolefinformteile sind bevorzugt Flaschen, Dosen, Flüssigkeitsbehälter, Flüssigkeitszuführungsteile, Luftführungsteile, Innenbehälter, Tanks, Faltenbälge, Abdeckungen, Gehäuse, Stutzen, Rohre und/oder Transportkoffer, besonders bevorzugt werden großvolumige blasgeformte Polyolefinformteile mit Volumina von 5 bis 200 l oder geschäumte Polyolefinformteile mit Schaumdichten von 300 bis 700 kg/m³.

Die durch Spritzgießen hergestellten Polyolefinformteile sind bevorzugt Verpackungen, besonders bevorzugt Pharmaverpackungen und Lebensmittelverpackungen, sowie Transportbehälter, Bauteile in der Automobilindustrie, Bauteile von Maschinen, Haushaltgeräten, Elektrogeräten und Elektronikgeräten.

Die Polyolefinformteile verbesserter Wärmeformbeständigkeit und Steifigkeit werden nach einem Verfahren durch Aufschmelzen und Homogenisieren von Mischungen aus 60 bis 99,9 Masse%, bevorzugt 75 bis 98 Masse%, nichtmodifizierten Propylenpolymeren A und 40 bis 0,1 Masse%, bevorzugt 25 bis 2 Masse%, modifizierten Propylenpolymeren B in Knetern, bevorzugt in Plastifiziereinheiten unter Einsatz von Schnecken mit L/D von 15 bis 33, bei Temperaturen von 180 bis 300°C hergestellt, wobei die schmelzflüssigen Mischungen
1) durch Ringdüsen als schlauchförmiger Vorformling extrudiert, durch Ausblasen in einem auf 10 bis 55°C temperierten geteilten Blaswerkzeug zum Hohlkörper umgeformt und gegebenenfalls in einem zweiten Blaswerkzeug einer zusätzlichen Längsverstreckung durch einen Streckstempel und einer weiteren radialen Verstreckung durch Blasluft unterzogen werden, oder
2) in ein auf 20 bis 130°C temperiertes Spritzgießwerkzeug zur Herstellung des Vorformlings eingespritzt und nach Entnahme, gegebenenfalls bevorzugt unter separater Temperierung des Vorformlings in einem Konditionierungswerkzeug auf Temperaturen von 80 bis 160°C, insbesondere unter einer ersten Vorformung durch Ausblasen, in das Blaswerkzeug überführt und durch Ausblasen zum Hohlkörper, gegebenenfalls bevorzugt unter zusätzlicher Längsverstreckung durch einen Streckstempel, umgeformt werden, oder
3) in Spritzgußmaschinen, bevorzugt mit Dreizonenschnecken einer Schneckenlänge von 18 bis 24 D, gegebenenfalls nach erfolgter Abkühlung und Granulierung, bei Massetemperaturen von 200 bis 300°C, bevorzugt 240 bis 270°C, hohen Einspritzgeschwindigkeiten und bei Werkzeugtemperaturen von 5 bis 70°C, bevorzugt 20 bis 50°C, zu Spritzgußformteilen verarbeitet werden.

Die nichtmodifizierten Propylenpolymere A bestehen aus
A1) üblichen Propylenpolymeren, bevorzugt unter Anwendung von Ziegler-Natta-Katalysatoren oder Metallocenkatalysatoren hergestellten Propylenhomopolymeren, insbesondere mit einem M_{w}/Mₙ-Verhältnis von 2 bis 4,5, und/oder Copolymeren aus Propylen, Ethylen und/oder α-Olefinen mit 4 bis 18 C-Atomen mit einem Propylengehalt von 80,0 bis 99,9 Masse% in Form von statistischen Copolymeren, Blockcopolymeren und/oder statistischen Blockcopolymeren, mit Schmelzindices von 0,1 bis 300 g/10 min bei 230°C/2,16 kg, bevorzugt 1 bis 100 g/10 min bei 230°C/2,16 kg, und/oder
A2) einer Polyolefinmischung mit einem M_{w}/Mₙ-Verhältnis von 2 bis 6 und einem Schmelzindex von 1 bis 40 g/10 min bei 230°C/2,16 kp, die aus
   A2.1) 60 bis 98 Masse% eines kristallinen Copolymeren aus 85 bis 99,5 Masse% Propylen und 15 bis 0,5 Masse% Ethylen und/oder einem α-Olefin der allgemeinen Formel CH₂=CHR, wobei R ein linearer oder verzweigter Alkylrest mit 2 bis 8 Kohlenstoffatomen ist,
   A2.2) 2 bis 40 Masse% eines elastischen Copolymers aus 20 bis 70 Masse% Ethylen und 80 bis 30 Masse% Propylen und/oder einem α-Olefin der allgemeinen Formel CH₂=CHR, wobei R ein linearer oder verzweigter Alkylrest mit 2 bis 8 Kohlenstoffatomen ist, besteht und/oder
A3) weitgehend amorphen Polypropylenen oder Propylen-Copolymeren mit einem Anteil an kristallinem Polypropylen bzw. kristallinem Propylen-Copolymer unter 10 Masse% mit einer Schmelzenthalpie unter 40 J/g und einem Schmelzindex von 0,1 bis 100 g/10 min bei 230°C/2,16 kg, wobei das weitgehend amorphe Polypropylen ein Homopolymer des Propylens und/oder ein Copolymer des Propylens aus mindestens 80 Mol % Propylen und höchstens 20 Mol % eines oder mehrerer α-Olefine der allgemeinen Formel CH₂=CHR ist, wobei R ein linearer oder verzweigter Alkylrest mit 2 bis 8 Kohlenstoffatomen ist.

Dabei können die nichtmodifizierten Propylenpolymere A 0,01 bis 2,5 Masse% Stabilisatoren, 0,01 bis 5 Masse% Verarbeitungshilfsmittel, 0,1 bis 1 Masse% Antistatika, 0,2 bis 3 Masse% Pigmente, 0,05 bis 1 Masse% Nukleierungsmittel, 2 bis 20 Masse% Flammschutzmittel, jeweils bezogen auf die Summe der nichtmodifizierten Propylenpolymere A, als Hilfsstoffe, und/oder 3 bis 40 Masse%, bezogen auf die Summe der nichtmodifizierten Propylenpolymere A , anorganische und/oder organische Füll- und/oder Verstärkungsstoffe enthalten.

Die modifizierten Propylenpolymere B sind erfindungsgemäß modifizierte Propylenhomopolymere und/oder Propylencopolymere mit Schmelzindices von 0,05 bis 40 g/10 min bei 230°C/2,16 kg, bevorzugt 0,25 bis 15 g/10 min bei 230°C/2,16 kg und einem Quotienten aus der Grenzviscosität des modifizierten Propylenpolymers B und der Grenzviscosität des zugrundeliegenden nichtmodifizierten Propylenpolymers mit weitgehend gleichem Molmassen-Gewichtsmittel von 0,20 bis 0,95.

In Bezug auf das Herstellungsverfahren sind die modifizierten Propylenpolymere B
B1) modifizierte Propylenpolymere, die durch Behandlung von Propylenhomopolymeren und/oder Copolymeren aus Propylen und Ethylen bzw. α-Olefinen mit 4 bis 18 C-Atomen sowie von Mischungen der genannten Polypropylene
   - mit mehrfunktionell ethylenisch ungesättigten Monomeren und
   - mit ionisierender Strahlung bzw. thermisch zerfallenden Radikalbildnern hergestellt wurden,
   und/oder
B2) modifizierte Propylenpolymere, die durch Umsetzung von Säure- und/oder Säureanhydridgruppen enthaltenden Polypropylenen, mit C₂₋ bis C₁₆ - Diaminen und/oder C₂ bis C₁₆ - Diolen, hergestellt wurden,
   und/oder
B3) modifizierte Propylenpolymere, die durch hydrolytische Kondensation von Polypropylenen, die hydrolysierbare Silangruppen enthalten, hergestellt wurden.

Bei der Variante 1) des erfindungsgemäßen Verfahrens wird der schlauchförmige Vorformling aus der Polyolefinmischung unter Trennung des Schlauchs an das gekühlte Blaswerkzeug übergeben, das sich in einer Schließeinheit zum Zusammenfahren und Auseinanderfahren der Blaswerkzeugteile befindet. Das Umformen des segmentierten Vorformlings zum blasgeformten Formteil erfolgt bei geschlossenem Blaswerkzeug durch komprimierte Luft bei einem Druck von 5 bis 10 bar. Für die Herstellung von großvolumigen blasgeformten Teilen aus der Polyolefinmischung ist eine Spreizung des Vorformlings und gegebenenfalls ein Vorblasen des Vorformlings noch bei geöffnetem Werkzeug erforderlich. Die Entformung des blasgeformten Polyolefinformteils erfolgt durch Öffnung des geteilten Werkzeugs.

Eine weitere Verbesserung der Festigkeit und Transparenz der blasgeformten Teile nach der erfindungsgemäßen Verfahrensvariante 1) läßt sich durch eine zusätzliche Verstreckung des blasgeformten Vorformteils in einem zweiten Blaswerkzeug durch einen Streckstempel in Längsrichtung in einem ersten Schritt und in radialer Richtung durch Blasluft in einem zweiten Schritt vor der Entformung des blasgeformten Polyolefinformteils erzielen.

Bei der Variante 2) des erfindungsgemäßen Verfahrens zur Herstellung blasgeformter Polyolefinformteile besteht die Plastifiziereinheit wie bei Spritzgießmaschinen aus einem Plastifizierzylinder mir mehreren Heizzonen, in dem eine drehbare Schnecke, bevorzugt in Form einer Dreizonenschnecke, als Kolben wirkt. Die Polyolefinmischung wird bei 180 bis 260°C aufgeschmolzen und in das auf 20 bis 130°C temperierte Spritzgießwerkzeug zur Herstellung des Vorformlings eingespritzt. Nach Entnahme des Vorformlings aus dem Spritzgießwerkzeug erfolgt nach Überführung in das Blaswerkzeug bei geschlossenem Blaswerkzeug die Ausformung zum blasgeformten Polyolefinformteil durch komprimierte Luft bei einem Druck von 5 bis 10 bar. Günstig für die Herstellung blasgeformter Polyolefinformteile aus den Polyolefinmischungen sind Mehrstationenmaschinen, bei denen die Verfahrensschritte Spritzgießen und Temperieren des Vorformlings, Blasformung des Polyolefinformteils und Auswerfen des Polyolefinformteils taktmäßig durch Schwenkvorgänge eines Drehtellers gesteuert werden.

Bei der Verfahrensvariante 2) läßt sich erfindungsgemäß eine weitere Verbesserung des Festigkeit und Transparenz der blasgeformten Polyolefinformteile durch eine zusätzliche Verstreckung des Vorformlings oder des blasgeformten Vorformteils bei dem Herstellungsprozeß erzielen. Beim Spritzstreckblasformen werden bei diskontinuierlichen Anlagen die spritzgegossenen Vorformlinge diskontinuierlich in Streckblasstationen überführt, in einem Konditionierungswerkzeug auf eine Verstrecktemperatur von 80 bis 160°C erwärmt, wobei gleichzeitig eine Vorausformung durch Blasen erfolgen kann, und nachfolgend im Blaswerkzeug durch einen Streckstempel einer Längsverstreckung unterzogen und zum blasgeformten Polyolefinformteil durch komprimierte Luft bei einem Druck von 10 bis 30 bar ausgeformt. In kontinuierlichen Mehrstationenanlagen werden die vier Verfahrensschritte durch Schwenken eines Drehtellers jeweils um 90° gesteuert. Günstig sind Konditionierungswerkzeuge mit geteilten Heizzonen, die den Wanddicken für die blasgeformten Polyolefinformteile aus den Polyolefinmischungen angepaßt werden.

Werden bei dem erfindungsgemäßen Verfahren zur Herstellung von blasgeformten Polyolefinformteilen Treibmittel als Hilfsstoffe in den Polyolefinmischungen eingesetzt, so resultieren geschäumte blasgeformte Polyolefinformteile mit Schaumdichten von 300 bis 700 kg/m³. Geeignete Treibmittel sind insbesondere gasabspaltende Treibmittel wie Natriumhydrogencarbonat, Azodicarbonamid und/oder Cyanursäuretrihydrazid.

Das erfindungsgemäße Verfahren zur Herstellung von blasgeformten Polyolefinformteilen aus Polyolefinmischungen kann in einer Maschinenanlage mit den weiteren Verfahrensschritten Bedruckung des blasgeformten Polyolefinformteils, Füllung des blasgeformten Polyolefinformteils mit flüssigen Medien oder Schüttgütern, Verschließen des blasgeformten gefüllten Polyolefinformteils und Auswerfen des gefüllten und bedruckten blasgeformten Polyolefinformteils als Verpackungsverfahren kombiniert werden.

Bei der Verfahrensvariante 3) des erfindungsgemäßen Verfahrens können die Polyolefinmischungen aus den nichtmodifizierten Propylenpolymeren A) und den modifizierten Propylenpolymeren B) als Granulatmischung oder als Blend in die Spritzgußmaschine dosiert werden. Bei der Dosierung als Blend erfolgt eine Vorhomogenisierung der Granulatmischung in einem kontinuierlichen Kneter.

Die Einspritzgeschwindigkeit bei der Herstellung der durch Spritzgießen erzeugten Polyolefinformteile soll möglichst hoch eingestellt werden, um Einfallstellen und schlechte Bindenähte bei den Polyolefinformteilen auszuschließen.

Vorzugsweise werden bei dem erfindungsgemäßen Verfahren zur Herstellung von Polyolefinformteilen hoher Steifigkeit und Zähigkeit Spritzgußmaschinen mit Spritzeinheiten eingesetzt, die Dreizonenschnecken mit einer Schneckenlänge von 18 bis 24 D besitzen.

Ein weiterer Vorzug des erfindungsgemäßen Verfahrens besteht darin, daß auf Grund der hohen Steifigkeit und Zähigkeit der erfindungsgemäßen durch Spritzgießen hergestellten Polyolefinformteile bei vergleichbaren Werkstoffeigenschaften zu Polypropylen-Standard-Spritzgußformteilen Wandstärke und Artikelgewicht reduziert werden können und darüber hinaus die Zykluszeiten der Verarbeitung infolge einer Reduktion der Kühlzeit und höheren Entformungstemperaturen verkürzt werden können.

Die erfindungsgemäßen Polyolefinformteile sind insbesondere für einen Einsatz in der Verpackungsindustrie, in der Haushaltsgeräteindustrie, im Labor- und Krankenhausbedarf, für Garten- und Landwirtschaftsgeräte, Transportbehälter sowie für Bauteile in der Automobilindustrie, Bauteile von Maschinen, Elektrogeräten und Elektronikgeräten geeignet.

Ein bevorzugtes Einsatzgebiet der erfindungsgemäßen blasgeformten Polyolefinformteile ist die Verpackungsindustrie, insbesondere Flaschen für Lebensmittel wie Speiseöl, Soßen, Saft und Sirup, für Haushaltschemikalien wie Spülmittel, Waschmittel und Bleichlauge, für Öle wie Motorenöl oder Schmieröl und für Kosmetika und Pharmazeutika sowie Transportkoffer mit formgetreuen Einsätzen.

Bei besonderen Anforderungen an die Sperrschichteigenschaften von blasgeformten Polyolefinformteilen für Lebensmittelverpackungen wie bei Flaschen für Ketchup, Salatdressings und Mayonaise werden blasgeformte Mehrschichtverbunde aus den Polyolefinmischungen und hydrolysierten Ethylen-Vinylacetat-Copolymeren, Polyamid oder Polyethylenterephthalat als Sperrschichtpolymere eingesetzt.

Ein weiteres bevorzugtes Einsatzgebiet von blasgeformten Polyolefinformteilen bildet die Kraftfahrzeugindustrie, bei der die blasgeformten Teile insbesondere als Ansaugstutzen und Krümmer für Luftfilter, Luftführungskanäle für Heiz- bzw. Klimaanlage, Bremflüssigkeitsbehälter, Scheibenwaschbehälter, Überlaufbehälter für Kühler, Druckausgleichbehälter, Faltenbälge, Steuerketten-Abdeckungen, Spiralrohre und Entfrosterdüsen eingesetzt werden.

Weitere bevorzugte Anwendungen von blasgeformten Polyolefinformteilen liegen in der Haushaltsgeräteindustrie, bei der die erfindungsgemäßen blasgeformten Polyolefinformteile insbesondere als Flüssigkeitsbehälter für Waschmaschinen, Geschirrspülmaschinen, Kaffeemaschinen und Dampfbügeleisen, als flüssigkeitszuführende Teile für Waschmaschinen und Geschirrspülmaschinen, Luftführungsteile für Wäschetrockner sowie Innenteile für Elektroheißwasserbereiter eingesetzt werden.

Bevorzugte Anwendungen von blasgeformten Polyolefinformteilen liegen ebenfalls im Labor- und Krankenhausbedarf, bei motorgetriebenen Garten- und Landwirtschaftsgeräten, bei Teilen von Sonnenkollektoren und Gehäusen von Elektro- und Elektronikgeräten.

Die durch Spritzgießen hergestellten Polyolefinformteile sind bevorzugt für Verpackungen, insbesondere für Pharmaverpackungen und Lebensmittelverpackungen, Transportbehälter sowie für Bauteile in der Automobilindustrie, Bauteile von Maschinen, Haushaltsgeräten, Elektrogeräten und Elektronikgeräten geeignet.

Die Erfindung wird durch nachfolgende Beispiele erläutert :

### Beispiel 1 :

### Herstellung des modifizierten Propylenpolymeren B1):

In einen kontinuierlichen beheizbaren Durchlaufmischer wird ein pulverförmiges Polypropylen-Homopolymer (Schmelzindex von 0,2 g/10 min bei 230°C/2,16 kp, mittlerer Partikeldurchmesser 0,55 mm) kontinuierlich dosiert. Weiterhin werden in den Durchlaufmischer 0,1 Masse % Calciumstearat und 0,09 Masse % Bis(tert.butylperoxy)-2,5-dimethylhexan, jeweils bezogen auf das Polypropylen-Homopolymer, kontinuierlich dosiert. Unter homogener Durchmischung bei 45°C wird das mit thermisch zerfallendem Radikalbildner und Hilfsstoff beladene Polypropylen-Homopolymer bei einer Verweilzeit von 6 min bei 45°C durch ein Butadien-Stickstoff-Gemisch mit 0,28 Masse % Butadien, bezogen auf das Polypropylen-Homopolymer, sorptiv beladen. Nach Überführung in einen Doppelschneckenextruder wird das pulverförmige Reaktionsgemisch in Kontakt mit dem eindosierten Butadien-Stickstoff-Gemisch unter Zusatz von 0,1 Masse% Tetrakis[methylen(3,5-ditert.butylhydroxyhydrocinnamat)]methan und 0,1 Masse% Tris(2,4-di-tert.butylphenyl)phosphit) bei einer Massetemperatur von 235°C aufgeschmolzen, nach einer Grobentgasung unter Eindosierung von Wasser als Schleppmittel einer Feinentgasung unterzogen, ausgetragen und granuliert.

Das resultierende modifizierte Polypropylen besitzt einen IR-spektroskopisch ermittelten Gehalt an gebundenem Butadien von 0,20 Masse % und einen Schmelzindex von 2,5 g/10 min bei 230°C/2,16 kp.

### Herstellung der Polyolefinmischung :

Eine Mischung aus
B1) 15 Masse% eines modifizierten Polypropylens (IR-spektroskopisch ermittelter Ge-halt an gebundenem Butadien 0,20 Masse %, Schmelzindex 2,5 g/10 min bei 230°C/ 2,16 kp)
A1) 55 Masse% eines Polypropylen-Copolymers (Schmelzindex 5,5 g/10 min bei 230°C/2,16 kp, Dichte 0,905 g/cm³ bei 23°C, Ethylengehalt 4,2 Masse%)
A2) 30 Masse% eines Reaktorblends (Ethylengehalt 33 Mol%, Schmelzindex 5 g/10 min bei 230°C/2,16 kg, bestehend aus einem kristallinen Propylen-Ethylen-Copolymer und einem elastischen Ethylen-Propylen-Copolymer)
sowie 0,1 Masse% Tetra-kis[methylen(3,5-di-tert.butylhydroxyhydrocinnamat)]methan und 0,1 Masse% Tris-(2,4-di-tert.butyl-phenyl)phosphit, jeweils bezogen auf die Summe der Polyolefine,
wird in einem Werner&Pfleiderer-Doppelschneckenextruder ZSK 84, Temperaturprofil 100/145/185/210/220/220/200/185°C, aufgeschmolzen, homogenisiert, ausgetragen und granuliert.

Das resultierende Polyolefincompound besitzt einen Schmelzindex von 11,5 g/10 min bei 230°C/2,16 kp und eine Dichte 0,92 g/cm³ bei 23°C.

### Herstellung des spannungsrißbeständigen Detergentienbehälters:

In einer Spritzstreckblaseinrichtung aus Plastifiziereinheit mit Dreizonenschnecke, Drehteller mit gekühltem 4-fach Spritzgießwerkzeug, Konditionierungswerkzeug mit drei Heizzonen, Blaswerkzeug mit Streckstempel und mit Auswerfvorrichtung wird das Polyolefincompound (Schmelzindex 11,5 g/10 min bei 230°C/2,16 kp, Dichte 0,92 g/cm³ bei 23°C) in der Plastifiziereinheit bei einem Temperaturprofil 110/170/210/220/220°C aufgeschmolzen und in das auf 125°C temperierte 4-fach Spritzgießwerkzeug eingespritzt. Der Vorformling (27 g, Wanddicke 4 bis 5 mm, Höhe 98 mm, Außendurchmesser 30,5 mm) wird durch den Dorn des Drehtellers aus dem Spritzgießwerkzeug entnommen und durch Schwenkbewegung des Drehtellers um 90° in das elektrisch beheizte Konditionierungswerkzeug eingebracht, dessen Heizzonen auf 142°C (Boden des Flaschen-Vorformlings), 145°C (Mittelteil des Flaschen-Vorformlings) und 142°C ( Oberteil des Flaschen-Vorformlings) eingestellt sind. Nach einer Konditionierungszeit von 75 s erfolgt eine Vorblasformung durch komprimierte Luft, Entnahme des blasgeformten Vorformteils und Überführung mittels des Dorns des Drehtellers durch Schwenkbewegung des Drehtellers um 90° in das Blaswerkzeug, wo das blasgeformte Vorformteil zunächst durch den Streckstempel einer Längsverstreckung unterzogen und nachfolgend durch komprimierte Luft bei einem Druck von 18 bar ausgeformt wird. Die Längsverstreckung des Vorformteils im Blaswerkzeug beträgt 3,0 : 1, die radiale Verstreckung des Vorformteils 2,2 : 1 . Der blasgeformte Detergentienbehälter wird nach 6,5 s dem geöffneten Blaswerkzeug entnommen, durch Schwenkbewegung des Drehtellers um 90° dem Auswerfer zugeführt und ausgeworfen. Im Zeitraum von 1 h konnten 812 Detergentienflaschen gefertigt werden.

Zur Ermittlung der Werkstoffeigenschaften wurden durch Auftrennung des Behältermantels und Ausstanzen Prüfkörper hergestellt. Die Wanddicke 50mm oberhalb des Flaschenbodens betrugt 2,03 ± 0,04 mm. Die Spannungsrißbeständigkeit nach ASTM D-1693-97 (Bell-Test, 5% Leventinlösung, Prüftemperatur 50°C) betrug > 1000 h, bei der Ermittlung der Wärmeformbeständigkeit nach Vicat B(ISO 306) wurde eine Erweichungstemperatur von 85°C ermittelt. Die Transparenz nach Schuch (Streuwert S2*) beträgt 84,5%, der Haze-Wert (ASTM D-1003-92) 39,9. Die Grenztemperatur für die Heißbefüllung des Behälters ohne Deformation beträgt 90°C.

### Beispiel 2 (Vergleichsbeispiel)

Ein Blend aus
A1) 70 Masse% eines Polypropylen-Copolymers (Schmelzindex 5,5 g/10 min bei 230°C/2,16 kp, Dichte 0,905 g/cm³ bei 23°C, Ethylengehalt 4,2 Masse%)
A2) 30 Masse% eines Reaktorblends (Ethylengehalt 33 Mol%, Schmelzindex 5 g/10 min bei 230°C/2,16 kg, bestehend aus einem kristallinen Propylen-Ethylen-Copolymer und einem elastischen Ethylen-Propylen-Copolymer)
sowie 0,1 Masse% Tetra-kis[methylen(3,5-di-tert,butylhydroxyhydrocinnamat)]methan und 0,1 Masse% Tris-(2,4-di-tert.butyl-phenyl)phosphit, jeweils bezogen auf die Summe der Polyolefine A1) und A2), wurde unter Verarbeitungsbedingungen nach Beispiel 1 zum Blend (Schmelzindex von 10,2 g/10 min bei 230°C/2,16 kp, Dichte 0,92 g/cm³ bei 23°C) und zum daraus hergestellten Behälter verarbeitet.

Durch Wanddickeninhomogenitäten insbesondere im Bereich der Einfüllung kam es zu mehrmaligen Produktionsausfällen und Stillständen, so daß lediglich 448 Detergentienflaschen pro Stunde hergestellt werden konnten.

Zur Ermittlung der Werkstoffeigenschaften wurden durch Auftrennung des Behältermantels und Ausstanzen Prüfkörper hergestellt. Die Wanddicke 50mm oberhalb des Flaschenbodens betrugt 2,06 ± 0,18 mm. Die Spannungsrißbeständigkeit nach ASTM D-1693-97 (Bell-Test, 5% Leventinlösung, Prüftemperatur 50°C) betrug > 1000 h, bei der Ermittlung der Wärmeformbeständigkeit nach Vicat B(ISO 306) wurde eine Erweichungstemperatur von 84°C ermittelt. Die Transparenz nach Schuch (Streuwert S2*) beträgt 85,8%, der Haze-Wert (ASTM D-1003-92) 25,9%. Die Grenztemperatur für die Heißbefüllung des Behälters ohne Deformation beträgt 85°C.

### Beispiel 3 (Vergleichsbeispiel)

Ein Blend aus Polyethylen hoher Dichte (Schmelzindex 32 g/10 min bei 190°C/21,6 kp, Dichte 0,959 g/cm³ bei 23°C), 0,1 Masse% Tetrakis[methylen(3,5-di-tert.butylhydroxyhydrocinnamat)]methan und 0,1 Masse% Tris-(2,4-di-tert.butylphenyl)phosphit, jeweils bezogen auf PE-HD, wurde in der Spritzstreckblaseinrichtung nach Beispiel 1 bei einem Temperaturprofil 100/160/200/210/205°C aufgeschmolzen und in das auf 100°C temperierte 4-fach Spritzgießwerkzeug eingespritzt. Der Vorformling (27 g, Wanddicke 4 bis 5 mm, Höhe 97 mm, Außendurchmesser 30,1 mm) wird durch den Dorn des Drehtellers aus dem Spritzgießwerkzeug entnommen und durch Schwenkbewegung des Drehtellers um 90° in das elektrisch beheizte Konditionierungswerkzeug eingebracht, dessen Heizzonen auf 122°C (Boden des Flaschen-Vorformlings), 128°C (Mittelteil des Flaschen-Vorformlings) und 122°C Oberteil des Flaschen-Vorformlings) eingestellt sind. Nach einer Konditionierungszeit von 75 s erfolgt eine Vorblasformung durch komprimierte Luft, Entnahme des blasgeformten Vorformteils und Überführung mittels des Dorns des Drehtellers durch Schwenkbewegung des Drehtellers um 90° in das Blaswerkzeug, wo das blasgeformte Vorformteil zunächst durch den Streckstempel einer Längsverstreckung unterzogen und nachfolgend durch komprimierte Luft bei einem Druck von 18 bar ausgeformt wird. Die Längsverstreckung des Vorformteils im Blaswerkzeug beträgt 3,0 : 1, die radiale Verstreckung des Vorformteils 2,2 : 1 . Der blasgeformte Behälter wird nach 6,5 s dem geöffneten Blaswerkzeug entnommen, durch Schwenkbewegung des Drehtellers um 90° dem Auswerfer zugeführt und ausgeworfen. Im Zeitraum von 1 h konnten 825 Flaschen gefertigt werden.

Zur Ermittlung der Werkstoffeigenschaften wurden durch Auftrennung des Behältermantels und Ausstanzen Prüfkörper hergestellt. Die Wanddicke 50mm oberhalb des Flaschenbodens betrugt 2,06 ± 0,12 mm. Die Spannungsrißbeständigkeit nach ASTM D-1693-97 (Bell-Test, 5% Leventinlösung, Prüftemperatur 50°C) betrug 100 h. Bei der Ermittlung der Wärmeformbeständigkeit nach Vicat B ( ISO 306) wurde eine Erweichungstemperatur von 75°C ermittelt. Die Transparenz nach Schuch (Streuwert S2*) beträgt 63%. Die Grenztemperatur für die Heißbefüllung des Behälters ohne Deformation beträgt 65°C. Die Flaschen können nicht als Detergentienbehälter oder zur Heißbefüllung eingesetzt werden.

### Beispiel 4 (nicht erfindungsgemäß)

### Herstellung des modifizierten Propylenpolymeren B3):

In einen beheizbaren Edelstahlreaktor mit einem Volumen von 12 l, der in einer Gammabestrahlungsanlage vom Typ "Gammabeam" installiert ist, werden 2250 g eines unstabilisierten Polypropylenpulvers (Partikeldurchmesser 50 bis 250 µm, spezifische Oberfläche 4 x 10⁻² m²/g, Schmelzindex 0,5 g/10 Min. bei 230°C /2,16 kp) überführt. Nach Einschaltung der Heizung wird der Edelstahlreaktor mehrfach mit Argon gespült und anschließend 28 g Vinyltriethoxysilan in den Reaktor eindosiert. Nach Aufheizung des Edelstahlreaktors auf 130°C und Positionierung der Strahlenquellen in Bestrahlungsposition wird bei einer Dosisleistung von 55 krad/Std. bestrahlt. Nach einer Bestrahlungszeit von 40 Minuten beträgt die absorbierte Gammabestrahlungsdosis 36,6 krad. Nach Absenkung der Strahlenquellen in den Quellenkontainer wird der Edelstahlreaktor auf Raumtemperatur abgekühlt und das Vinyltriethoxysilan-gepfropfte Polypropylen 1 Std. im Vacuum bei 14o°C getrocknet.

Das resultierende modifizierte Polypropylen besitzt einen IR-spektroskopisch ermittelten Gehalt an gebundenem Vinyltriethoxysilan von 1,1% und einen Schmelzindex von 1,95 g/10 min bei 230°C/2,16 kp.

### Herstellung der Polyolefinmischung :

Eine Mischung aus
B3) 20 Masse% eines modifizierten Polypropylens (IR-spektroskopisch ermittelter Gehalt an gebundenem Vinyltriethoxysilan 1,1% Schmelzindex von 1,65 g/10 min bei 230°C/2,16 kp)
A1) 70 Masse% eines Polypropylen-Copolymers (Schmelzindex 1,2 g/10 min bei 230°C/2,16 kp, Dichte 0,905 g/cm³ bei 23°C, Ethylengehalt 8,3 Masse%)
A3) 5 Masse% eines amorphen Polypropylen-Blockcopolymers (Schmelzindex 1,2 g/10 min bei 230°C/2,16 kp, Dichte 0,91 g/cm³ bei 23°C, Ethylengehalt 10,5 Masse%)
A4) 5 Masse% eines nichtisotaktischen Propylen-Homopolymers (Schmelzindex 1,5 g/10 min bei 190°C/2,16 kp, Dichte 0,91 g/cm³ bei 23°C)
sowie 0,1 Masse% Tetra-kis[methylen(3,5-di-tert.butylhydroxyhydrocinnamat)]methan, 0,1 Masse% Tris-(2,4-di-tert.butylphenyl)phosphit und 0,2 Masse% Dibutylzinndilaurat, jeweils bezogen auf die Summe der Polyolefine,
wird in einem Werner&Pfleiderer-Doppelschneckenextruder ZSK 84, Temperaturprofil 100/145/185/210/220/220/ 200/185°C, aufgeschmolzen, homogenisiert, ausgetragen und granuliert.

Das resultierende Polyolefincompound besitzt einen Schmelzindex von 1,3 g/10 min bei 230°C/2,16 kp und eine Dichte 0,91 g/cm³ bei 23°C.

### Herstellung der Steuerketten-Abdeckung

In einer Extrusionsblasformanlage aus Plastifizierextruder mit genuteter Einzugszone, Dreizonenschnecke, L/D=22, 6-fach-Speicherblaskopfwerkzeug und 6 Blaswerkzeugen für Steuerketten-Abdeckungen wird das Polyolefincompound (Schmelzindex 1,3 g/10 min bei 230°C/2,16 kp) bei einem Temperaturprofil des Plastifizierextruders von 110/175/200/220/210/210°C aufgeschmolzen und über das Mehrfach-Speicherblaskopfwerkzeug als schlauchförmige Vorformlinge zu den auf 55°C temperierten Blaswerkzeugen überführt, in denen durch Einpressen komprimierter Luft eine Ausformung zum Rohling für die Steuerkettenabdeckung erfolgt.

Die Steuerkettenabdeckung (Wanddicke 4 mm, Masse 880 g) zeigt nach einer Wärmeschockbehandlung durch 10 min Heißdampfexposition bei 145°C keine Verformung. Ausgestanzte Prüfkörper ergeben bei der Wärmeformbeständigkeitsprüfung (Vicat-B, ISO 306) eine Erweichungstemperatur von 86°C.

### Beispiel 5 (Vergleichsbeispiel)

Mischungen aus 100 Masse% eines Polypropylen-Copolymers A1) (Schmelzindex 2,5 g/10 min bei 230°C/2,16 kp, Dichte 0,905 g/cm³ bei 23°C, Ethylengehalt 4,2 Masse%), 0,1 Masse% Tetra-kis[methylen(3,5-di-tert.butylhydroxyhydrocinnamat)]-methan und 0,1 Masse% Tris-(2,4-di-tert.butylphenyl)phosphit, jeweils bezogen auf das eingesetzte Polypropylen-Copolymer werden unter Bedingungen nach Beispiel 4 zum Blend verarbeitet. Die Weiterverarbeitung in der Extrusionsblasformanlage für Steuerkettenabdeckungen nach Beispiel 4 scheiterte am Auslängen und Aufreißen bei der Ausformung der Rohlinge.

### Beispiel 6 (Vergleichsbeispiel)

Ein Blend aus Polyethylen hoher Dichte (Schmelzindex 32 g/10 min bei 190°C/21,6 kp, Dichte 0,959 g/cm³ bei 23°C), 0,1 Masse% Tetrakis[methylen(3,5-di-tert.butylhydroxyhydrocinnamat)]methan und 0,1 Masse% Tris-(2,4-di-tert.butylphenyl)phosphit, jeweils bezogen auf PE-HD, wird in der Extrusionsblasformanlage entsprechend Beispiel 4 bei einem Temperaturprofil des Plastifizierextruders von 190/155/185/200/200/190°C aufgeschmolzen und über das Mehrfach - Speicherblaskopfwerkzeug als schlauchförmige Vorformlinge zu den auf 40°C temperierten Blaswerkzeugen überführt, in denen durch Einpressen komprimierter Luft eine Ausformung zum Rohling für die Steuerkettenabdeckung erfolgt.

Die Steuerkettenabdeckung (Wanddicke 4 mm, Masse 870 g) zeigt nach einer Wärmeschockbehandlung durch 10 min Heißdampfexposition bei 145°C bereits starke Deformationen in den Kantenbereichen. Bei der Ermittlung der Wärmeformbeständigkeit nach Vicat B(ISO 306) wurde eine Erweichungstemperatur von 75,5°C ermittelt.

### Beispiel 7

### Herstellung des modifizierten Propylenpolymeren B1)

In einen kontinuierlichen beheizbaren Durchlaufmischer ein pulverförmiges statistisches Polypropylen-Copolymer (Schmelzindex von 0,85 g/10 min bei 230°C/2,16 kp, mittlerer Partikeldurchmesser 0,85 mm, Ethylengehalt 4,8 Masse%) kontinuierlich dosiert. Weiterhin werden in den Durchlaufmischer 0,05 Masse % Hydrotalcit, 0,05 Masse % Calciumstearat und 0,45 Masse % tert.Butylperoxybenzoat, jeweils bezogen auf das Polypropylen-Copolymer, kontinuierlich dosiert. Unter homogener Durchmischung bei 70°C wird das mit thermisch zerfallendem Radikalbildner und Hilfsstoff beladene Polypropylen-Copolymer bei einer Verweilzeit von 4 min bei 70°C durch das einströmende Divinylbenzol-Stickstoff-Gemisch mit 0,25 Masse % Divinylbenzol, bezogen auf das Polypropylen-Copolymer, sorptiv beladen. Nach Überführung in den Doppelschneckenextruder wird das pulverförmige Reaktionsgemisch in Kontakt mit dem eindosierten Divinylbenzol-Stickstoff-Gemisch unter Zusatz von 0,1 Masse% 0,1 Masse% Tetrakis[methylen(3,5-di-tert.butylhydroxyhydrocinnamat)]methan und 0,1 Masse% Tris(2,4-di-tert.-butylphenyl)phosphit bei einer Massetemperatur von 225°C aufgeschmolzen, nach einer Grobentgasung unter Eindosierung von Wasser als Schleppmittel einer Feinentgasung unterzogen, ausgetragen und granuliert.

Das resultierende modifizierte Polypropylen-Copolymer besitzt einen IR-spektroskopisch ermittelten Gehalt an gebundenem Divinylbenzol von 0,19 Masse % und einen Schmelzindex von 1,65 g/10 min bei 230°C/2,16 kp.

### Herstellung von 10 I-Kanistern :

Eine Granulatmischung aus
B1) 15 Masse% eines modifizierten Polypropylen-Copolymers (Gehalt an gebundenem Divinylbenzol 0,19 Masse %, Schmelzindex 1,65 g/10 min bei 230°C/2,16 kp
A1) 85 Masse% eines Polypropylen-Copolymers (Schmelzindex 1,5 g/10 min bei 230°C/2,16 kp, Ethylengehalt 4,8 Masse%),
auf die 0,15 Masse% 5,7-Di-tert.butyl-3-(3,4-dimethylphenyl)3H-benzofuran-2-on und 0,15 Masse% Bis-2,2,6,6-tetramethyl-4-piperidylsebazat im Innenmischer aufgetrommelt wurde, wurde in einer Blasformmaschine Typ Fischer&Müller BFB 1-6 bei einer Massetemperatur von 188°C und einer Drehzahl von 60 U/min aufgeschmolzen, zu einem Schlauch extrudiert, und nachfolgend in einem auf 20°C temperierten Blasformwerkzeug unter Einpressen komprimierter Luft zu einem 10 l - Europakanister mit einem Nettogewicht von 380 g ausgeformt. Die Zykluszeit betrug 30,2 s.

Beim Abwurftest des wassergefüllten Kanisters bei 23°C erfolgte bis zu 2,6 m Fallhöhe kein Bruch.

Zur Ermittlung der Werkstoffeigenschaften wurden durch Auftrennung des Behältermantels und Ausstanzen Prüfkörper hergestellt. Die Wanddicke im Seitenwandbereich 150 mm unterhalb der Einfüllöffnung betrug 1,85±0,15 mm. Die Spannungsrißbeständigkeit nach ASTM D-1693-97 (Bell-Test, 5% Leventinlösung, Prüftemperatur 50°C) betrugt >1000 h, bei der Ermittlung der Wärmeformbeständigkeit nach Vicat B (ISO 306) wurde eine Erweichungstemperatur von 85,5°C ermittelt. Die Grenztemperatur für die Heißbefüllung des Behälters ohne Deformation beträgt 90°C. Die Transparenz nach Schuch (Streuwert S2*) beträgt 83,1%, der Haze-Wert (ASTM D-1003-92) 49,8%.

### Beispiel 8 (Vergleichsbeispiel)

Ein Granulat eines Polypropylen-Copolymers A1) (Schmelzindex 1,5 g/10 min bei 230°C/2,16 kp, Ethylengehalt 4,8 Masse%), auf das 0,15 Masse% 5,7-Di-tert.butyl-3-(3,4-dimethylphenyl)3H-benzofuran-2-on und 0,15 Masse% Bis-2,2,6,6-tetramethyl-4-piperidylsebazat im Innenmischer aufgetrommelt wurde, wurde unter den Bedingungen entsprechend Beispiel 7 verarbeitet.
Es waren keine voll ausgeformten Kanister herstellbar, da es zu einer zu starken Auslängung mit teilweise nachfolgendem Abreißen des extrudierten Schlauchs kam.

### Beispiel 9 (Vergleichsbeispiel)

Ein Blend aus Polyethylen hoher Dichte (Schmelzindex 6,5 g/10 min bei 190°C/2,16 kp, Dichte 0,953 g/cm³ bei 23°C), 0,15 Masse% Tetra-kis[methylen(3,5-ditert.butylhydroxyhydrocinnamat)]methan und 0,10 Masse% Tris-(2,4-di-tert.butylphenyl)phosphit, jeweils bezogen auf PE-HD, wurde in einer Blasformmaschine nach Beispiel 7 bei einer Massetemperatur von 172°C und einer Drehzahl von 60 U/min aufgeschmolzen, zu einem Schlauch extrudiert, und nachfolgend in einem auf 18°C temperierten Blasformwerkzeug unter Einpressen komprimierter Luft zu einem 10 l - Europakanister mit einem Nettogewicht von 385 g ausgeformt. Die Zykluszeit betrug 29,8 s.

Beim Abwurftest des wassergefüllten Kanisters bei 23°C aus 3,0 m Fallhöhe erfolgte kein Bruch.

Zur Ermittlung der Werkstoffeigenschaften wurden durch Auftrennung des Behältermantels und Ausstanzen Prüfkörper hergestellt. Die Wanddicke im Seitenwandbereich 150 mm unterhalb der Einfüllöffnung betrug 1,85±0,15 mm. Die Spannungsrißbeständigkeit nach ASTM D-1693-97 (Bell-Test, 5% Leventinlösung, Prüftemperatur 50°C) betrugt 130 h, bei der Ermittlung der Wärmeformbeständigkeit nach Vicat B (ISO 306) wurde eine Erweichungstemperatur von 74°C ermittelt. Die Grenztemperatur für die Heißbefüllung des Behälters ohne Deformation beträgt 65°C. Die Transparenz nach Schuch (Streuwert S2*) beträgt 63%.
Die Kanister können nicht als Detergentienbehälter oder zur Heißbefüllung eingesetzt werden.

### Beispiel 10 :

### Herstellung des modifizierten Propylenpolymeren B1 :

In einen kontinuierlichen beheizbaren Durchlaufmischer wird ein pulverförmiges Polypropylen-Homopolymer (Schmelzindex von 0,2 g/10 min bei 230°C/2,16 kp, mittlerer Partikeldurchmesser 0,55 mm) kontinuierlich dosiert. Weiterhin werden in den Durchlaufmischer 0,1 Masse % Calciumstearat und 0,09 Masse % Bis(tert.butylperoxy)-2,5-dimethylhexan, jeweils bezogen auf das Polypropylen-Homopolymer, kontinuierlich dosiert. Unter homogener Durchmischung bei 45°C wird das mit thermisch zerfallendem Radikalbildner und Hilfsstoff beladene Polypropylen-Homopolymer bei einer Verweilzeit von 6 min bei 45°C durch ein Butadien-Stickstoff-Gemisch mit 1,1 Masse % Butadien, bezogen auf das Polypropylen-Homopolymer, sorptiv beladen. Nach Überführung in einen Doppelschneckenextruder wird das pulverförmige Reaktionsgemisch in Kontakt mit dem eindosierten Butadien-Stickstoff-Gemisch unter Zusatz von 0,1 Masse% Tetrakis[methylen(3,5-ditert.butylhydroxyhydrocinnamat)]methan und 0,1 Masse% Tris(2,4-di-tert.butylphenyl)phosphit) bei einer Massetemperatur von 235°C aufgeschmolzen, nach einer Grobentgasung unter Eindosierung von Wasser als Schleppmittel einer Feinentgasung unterzogen, ausgetragen und granuliert.
Das resultierende modifizierte Polypropylen besitzt einen IR-spektroskopisch ermittelten Gehalt an gebundenem Butadien von 0,8 Masse % , einen Schmelzindex von 2,5 g/10 min bei 230°C/2,16 kp, ein Molmassen-Zahlenmittel von 489 kg/mol, eine Gleichgewichtskomplianz Jₑ₀ von 4,08 x 10⁻³ Pa⁻¹ (Kriechversuch in Kegel-Platte-Geometrie bei 230°C) und einen Kristallisationspunkt (DSC) von 128,5°C.

### Herstellung der Blends aus nichtmodifizierten Propylenpolymeren A und modifizierten Propylenpolymeren B:

In einem Collin-Labordoppelschneckenextruder (Schneckendurchmesser 25 mm) wird bei einem Durchsatz von 4,2 kg/Std. eine Mischung aus 99,0 Masse % eines Polypropylen-Homopolymers A1) (Schmelzindex 2,4 g/10 min bei 230°C/2,16 kp, stabilisiert durch 0,1 Masse% Tetrakis[methylen(3,5-di-tert.butylhydroxyhydrocinnamat)]methan und 0,1 Masse% Tris(2,4-di-tert.butylphenyl)phosphit) und 1,0 Masse % eines modifizierten Propylenpolymers B1) [Gehalt an gebundenem Butadien 0,8 Masse % , Schmelzindex 2,5 g/10 min bei 230°C/2,16 kp, Molmassen-Zahlenmittel 489 kg/mol, Gleichgewichtskomplianz Jₑ₀ von 4,08 x 10⁻³ Pa⁻¹ (Kriechversuch in Kegel-Platte-Geometrie bei 230°C), Kristallisationspunkt (DSC) 128,5°C] aufgeschmolzen, bei einer Massetemperatur von 225°C und einer Verweilzeit von 25 s homogenisiert, über zwei Runddüsen ausgetragen, als zwei 3mm-dicke Stränge abgezogen und nach Erstarrung im Wasserbad granuliert. Das Granulat besitzt einen Schmelzindex von 2,1 g/10 min bei 230°C/2,16 kp.

### Herstellung der Polyolefin-Spritzgußformteile

Das hergestellte Granulat wird in einer Ferromatic-Millacron-Spritzgußmaschine FM 60, die eine Dreizonenschnecke mit einer Schneckenlänge von 22 D besitzt, bei einer Massetemperatur von 225°C und bei einer Werkzeugtemperatur von 50°C gemäß DIN 16774 zu Normspritzprüfstäben verarbeitet.

An den Normspritzprüfstäben wurden folgende Eigenschaften ermittelt:
Biege-E-Modul: 1597 MPa (23°C, ISO 178)
Kerbschlagzähigkeit nach Charpy : 5,67 kJ/m² (23°C, ISO 179 1eA)
Kristallisationspunkt (DSC, ISO 3146): 124,5°C

Unter gleichen Bedingungen hergestellte Normspritzprüfstäbe aus 100% des entsprechenden Polypropylen-Homopolymers A1) (Schmelzindex 2,4 g/10 min bei 230°C/2,16 kp, stabilisiert durch 0,1 Masse% Tetrakis[methylen(3,5-di-tert.butylhydroxyhydrocinnamat)]methan und 0,1 Masse% Tris(2,4-di-tert.butylphenyl)phosphit) besitzen als Vergleich folgende Eigenschaften :
Biege-E-Modul: 1517 MPa (23°C, ISO 178)
Kerbschlagzähigkeit nach Charpy : 5,11 kJ/m² (23°C, ISO 179 1eA)
Kristallisationspunkt (DSC, ISO 3146): 114,3°C

### Beispiel 11

### Herstellung der Blends aus nichtmodifizierten Propylenpolymeren A) und modifizierten Propylenpolymeren B):

In einem Collin-Labordoppelschneckenextruder (Schneckendurchmesser 25 mm) wird bei einem Durchsatz von 4,0 kg/Std. eine Mischung aus 95,0 Masse % eines Polypropylen-Homopolymers A1) (Schmelzindex 2,4 g/10 min bei 230°C/2,16 kp, stabilisiert durch 0,1 Masse% Tetrakis[methylen(3,5-di-tert.butylhydroxyhydrocinnamat)]methan und 0,1 Masse% Tris(2,4-di-tert.butylphenyl)phosphit) und 5,0 Masse % des modifizierten Propylenpolymers B1) nach Beispiel 10 [Gehalt an gebundenem Butadien 0,8 Masse %, Schmelzindex 2,5 g/10 min bei 230°C/2,16 kp, Molmassen-Zahlenmittel 489 kg/mol, Gleichgewichtskomplianz Jₑ₀ 4,08 x 10⁻³ Pa⁻¹ (Kriechversuch in Kegel-Platte-Geometrie bei 230°C), Kristallisationspunkt (DSC) 128,5°C] aufgeschmolzen, bei einer Massetemperatur von 235°C und einer Verweilzeit von 28 s homogenisiert, über zwei Runddüsen ausgetragen, als zwei 3mm-dicke Stränge abgezogen und nach Erstarrung im Wasserbad granuliert. Das Granulat besitzt einen Schmelzindex von 2,2 g/10 min bei 230°C/2,16 kp.

### Herstellung der Polyolefin-Spritzgußformteile

Das hergestellte Granulat wird in einer Ferromatic-Millacron-Spritzgußmaschine FM 60, die eine Dreizonenschnecke mit einer Schneckenlänge von 22 D besitzt, bei einer Massetemperatur von 225°C und bei einer Werkzeugtemperatur von 50°C gemäß DIN 16774 zu Normspritzprüfstäben verarbeitet.

An den Normspritzprüfstäben wurden folgende Eigenschaften ermittelt:
Biege-E-Modul: 1641 MPa (23°C, ISO 178)
Kerbschlagzähigkeit nach Charpy : 5,68 kJ/m² (23°C, ISO 179 1eA)
Kristallisationspunkt (DSC, ISO 3146): 126,4°C

### Beispiel 12

### Herstellung der Blends aus nichtmodifizierten Propylenpolymeren A) und modifizierten Propylenpolymeren B):

In einem Collin-Labordoppelschneckenextruder (Schneckendurchmesser 25 mm) wird bei einem Durchsatz von 3,9kg/Std. eine Mischung aus 90,0 Masse % eines Polypropylen-Homopolymers A1) (Schmelzindex 2,4 g/10 min bei 230°C/2,16 kp, stabilisiert durch 0,1 Masse% Tetrakis[methylen(3,5-di-tert.butylhydroxyhydrocinnamat)]methan und 0,1 Masse% Tris(2,4-di-tert.butylphenyl)phosphit) und 10,0 Masse % des modifizierten Propylenpolymers B1) nach Beispiel 10 [Gehalt an gebundenem Butadien 0,8 Masse % , Schmelzindex 2,5 g/10 min bei 230°C/2,16 kp, Molmassen-Zahlenmittel 489 kg/mol, Gleichgewichtskomplianz Jₑ₀ 4,08 x 10⁻³ Pa⁻¹ (Kriechversuch in Kegel-Platte-Geometrie bei 230°C), Kristallisationspunkt (DSC) 128,5°C] aufgeschmolzen, bei einer Massetemperatur von 238°C und einer Verweilzeit von 30 s homogenisiert, über zwei Runddüsen ausgetragen, als zwei 3mm-dicke Stränge abgezogen und nach Erstarrung im Wasserbad granuliert. Das Granulat besitzt einen Schmelzindex von 2.3 g/10 min bei 230°C/2,16 kp.

### Herstellung der Polyolefin-Spritzgußformteile :

Das hergestellte Granulat wird in einer Ferromatic-Millacron-Spritzgußmaschine FM 60, die eine Dreizonenschnecke mit einer Schneckenlänge von 22 D besitzt, bei einer Massetemperatur von 225°C und bei einer Werkzeugtemperatur von 50°C gemäß DIN 16774 zu Normspritzprüfstäben verarbeitet.

An den Normspritzprüfstäben wurden folgende Eigenschaften ermittelt :
Biege-E-Modul: 1678 MPa (23°C, ISO 178)
Kerbschlagzähigkeit nach Charpy: 5,52 kJ/m² (23°C, ISO 179 1eA)
Kristallisationspunkt (DSC, ISO 3146): 127,9°C

### Beispiel 13

### Herstellung der Blends aus nichtmodifizierten Propylenpolymeren A) und modifizierten Propylenpolymeren B):

In einem Collin-Labordoppelschneckenextruder (Schneckendurchmesser 25 mm) wird bei einem Durchsatz von 3,9kg/Std. eine Mischung aus 95,0 Masse % eines Polypropylen-Homopolymers A1) (Schmelzindex 8,0 g/10 min bei 230°C/2,16 kp, stabilisiert durch 0,1 Masse% Tetrakis[methylen(3,5-di-tert.butylhydroxyhydrocinnamat)]methan und 0,1 Masse% Tris(2,4-di-tert.butylphenyl)phosphit) und 5,0 Masse % des modifizierten Propylenpolymers B1) nach Beispiel 10 [Gehalt an gebundenem Butadien 0,8 Masse %, Schmelzindex 2,5 g/10 min bei 230°C/2,16 kp, Molmassen-Zahlenmittel 489 kg/mol, Gleichgewichtskomplianz Jₑ₀ 4,08 x 10⁻³ Pa⁻¹ (Kriechversuch in Kegel-Platte-Geometrie bei 230°C), Kristallisationspunkt (DSC) 128,5°C] aufgeschmolzen, bei einer Massetemperatur von 238°C und einer Verweilzeit von 30 s homogenisiert, über zwei Runddüsen ausgetragen, als zwei 3mm-dicke Stränge abgezogen und nach Erstarrung im Wasserbad granuliert. Das Granulat besitzt einen Schmelzindex von 8,5 g/10 min bei 230°C/2,16 kp.

### Herstellung der Polyolefin-Spritzgußformteile:

Das hergestellte Granulat wird in einer Ferromatic-Millacron-Spritzgußmaschine FM 60, die eine Dreizonenschnecke mit einer Schneckenlänge von 22 D besitzt, bei einer Massetemperatur von 225°C und bei einer Werkzeugtemperatur von 50°C gemäß DIN 16774 zu Normspritzprüfstäben verarbeitet.

An den Normspritzprüfstäben wurden folgende Eigenschaften ermittelt :
Biege-E-Modul: 1713 MPa (23°C, ISO 178)
Kerbschlagzähigkeit nach Charpy: 3,77 kJ/m² (23°C, ISO 179 1eA)
Kristallisationspunkt (DSC, ISO 3146): 126,8°C

Unter gleichen Bedingungen hergestellte Normspritzprüfstäbe aus 100% des entsprechenden Polypropylen-Homopolymers A1) (Schmelzindex 8,0 g/10 min bei 230°C/2,16 kp, stabilisiert durch 0,1 Masse% Tetrakis[methylen(3,5-di-tert.butylhydroxyhydrocinnamat)]methan und 0,1 Masse% Tris(2,4-di-tert.butylphenyl)phosphit) besitzen als Vergleich folgende Eigenschaften :
Biege-E-Modul: 1580 MPa (23°C, ISO 178)
Kerbschlagzähigkeit nach Charpy: 3.30 kJ/m² (23°C, ISO 179 1eA)
Kristallisationspunkt (DSC, ISO 3146): 113,6°C

### Beispiel 14

### Herstellung des modifizierten Propylenpolymeren B1):

In einen kontinuierlichen beheizbaren Durchlaufmischer ein pulverförmiges statistisches Polypropylen-Copolymer (Schmelzindex von 0,85 g/10 min bei 230°C/2,16 kp, mittlerer Partikeldurchmesser 0,85 mm) kontinuierlich dosiert. Weiterhin werden in den Durchlaufmischer 0,05 Masse % Hydrotalcit, 0.05 Masse % Calciumstearat und 0,45 Masse % tert.Butylperoxybenzoat, jeweils bezogen auf das Polypropylen-Copolymer, kontinuierlich dosiert. Unter homogener Durchmischung bei 70°C wird das mit thermisch zerfallendem Radikalbildner und Hilfsstoff beladene Polypropylen-Homopolymer bei einer Verweilzeit von 4 min bei 70°C durch das einströmende Divinylbenzol-Stickstoff-Gemisch mit 0,35 Masse % Divinylbenzol, bezogen auf das Polypropylen-Homopolymer, sorptiv beladen. Nach Überführung in den Doppelschneckenextruder wird das pulverförmige Reaktionsgemisch in Kontakt mit dem eindosierten Divinylbenzol-Stickstoff-Gemisch unter Zusatz von 0,1 Masse% 0,1 Masse% Tetrakis[methylen(3,5-di-tert.butylhydroxyhydrocinnamat)]methan und 0,1 Masse% Tris(2,4-di-tert.butylphenyl)phosphit bei einer Massetemperatur von 225°C aufgeschmolzen, nach einer Grobentgasung unter Eindosierung von Wasser als Schleppmittel einer Feinentgasung unterzogen, ausgetragen und granuliert.

Das resultierende modifizierte Polypropylen besitzt einen IR-spektroskopisch ermittelten Gehalt an gebundenem Divinylbenzol von 0,32 Masse %, einen Schmelzindex von 1,35 g/10 min bei 230°C/2,16 kp, ein Molmassen-Zahlenmittel von 550 kg/mol, eine Gleichgewichtskomplianz Jₑ₀ von 4,65 x 10⁻³ Pa⁻¹ (Kriechversuch in Kegel-Platte-Geometrie bei 230°C) und einen Kristallisationspunkt (DSC, ISO 3146) von 128,8°C.

### Herstellung der Blends aus nichtmodifizierten Propylenpolymeren A) und modifizierten Propylenpolymeren B) :

In einem Collin-Labordoppelschneckenextruder (Schneckendurchmesser 25 mm) wird bei einem Durchsatz von 4,1 kg/Std. eine Mischung aus 95,0 Masse % eines Reaktorblends A2) (Ethylengehalt 33 Mol%, Schmelzindex 3 g/10 min bei 230°C/2,16 kg, bestehend aus einem kristallinen Propylen-Ethylen-Copolymer und einem elastischen Ethylen-Propylen-Copolymer, stabilisiert durch 0,1 Masse% Tetrakis[me-thylen(3,5-di-tert.butylhydroxyhydrocinnamat)]methan und 0,1 Masse% Tris-(2,4-di-tert.butylphenyl)phosphit) und 5,0 Masse % eines modifizierten Propylenpolymers B1) [Gehalt an gebundenem Divinylbenzol von 0,32 Masse %, Schmelzindex 1,35 g/10 min bei 230°C/2,16 kp, Molmassen-Zahlenmittel 550 kg/mol, Gleichgewichtskomplianz Jₑ₀ 4,65 x 10⁻³ Pa⁻¹ (Kriechversuch in Kegel-Platte-Geometrie bei 230°C), Kristallisationspunkt (DSC) 128,8°C] aufgeschmolzen, bei einer Massetemperatur von 235°C und einer Verweilzeit von 30 s homogenisiert, über zwei Runddüsen ausgetragen, als zwei 3mm-dicke Stränge abgezogen und nach Erstarrung im Wasserbad granuliert. Das Granulat besitzt einen Schmelzindex von 2,2 g/10 min bei 230°C/2,16 kp.

### Herstellung der Polyolefin-Spritzgußformteile:

Das hergestellte Granulat wird in einer Ferromatic-Millacron-Spritzgußmaschine, die eine Dreizonenschnecke mit einer Schneckenlänge von 22 D besitzt, bei einer Massetemperatur von 225°C und bei einer Werkzeugtemperatur von 50°C gemäß DIN 16774 zu Normspritzprüfstäben verarbeitet.

An den Normspritzprüfstäben wurden folgende Eigenschaften ermittelt:
Biege-E-Modul: 1271 MPa (23°C, ISO 178)
Kerbschlagzähigkeit nach Charpy: 12,37 kJ/m² (23°C, ISO 179 1eA)
Kristallisationspunkt (DSC, ISO 3146): 126,5°C

Unter gleichen Bedingungen hergestellte Normspritzprüfstäbe aus 100% des entsprechenden Reaktorblends A2) [Ethylengehalt 33 Mol%, Schmelzindex 3 g/10 min bei 230°C/2,16 kg, bestehend aus einem kristallinen Propylen-Ethylen-Copolymer und einem elastischen Ethylen-Propylen-Copolymer, stabilisiert durch 0,1 Masse% Tetra-kis[methylen(3,5-di-tert.butylhydroxyhydrocinnamat)]methan und 0,1 Masse% Tris-(2,4-di-tert.butylphenyl)phosphit] besitzen als Vergleich folgende Eigenschaften:
Biege-E-Modul: 1204 MPa (23°C, ISO 178)
Kerbschlagzähigkeit nach Charpy: 10,9 kJ/m² (23°C, ISO 179 1eA)
Kristallisationspunkt (DSC, ISO 3146): 99,2°C

### Beispiel 15

### Herstellung des modifizierten Propylenpolymeren B3)

Das modifizierte Propylenpolymer B3) wird nach Beispiel 4 hergestellt. Das resultierende modifizierte Polypropylen besitzt einen IR-spektroskopisch ermittelten Gehalt an gebundenem Vinyltriethoxysilan von 1,1% und einen Schmelzindex von 1,95 g/10 min bei 230°C/2,16 kp. Nach Zusatz von 0,1 Masse% Tetra-kis[methylen(3,5-di-tert.butylhydroxyhydrocinnamat)]methan, 0,1 Masse% Tris-(2,4-ditert.butylphenyl)phosphit und 0,2 Masse% Dibutylzinndilaurat, Homogenisierung im Collin-Labordoppelschneckenextruder bei einer Massetemperatur von 225°C und Granulierung besitzt das modifizierte Polypropylen eine Gleichgewichtskomplianz Jₑ₀ von 2,15 x 10⁻³ Pa⁻¹ (Kriechversuch in Kegel-Platte-Geometrie bei 230°C) und einen Kristallisationspunkt (DSC, ISO 3146) von 131°C.

### Herstellung der Blends aus nichtmodifizierten Propylenpolymeren A) und modifizierten Propylenpolymeren B):

In einem Collin-Labordoppelschneckenextruder (Schneckendurchmesser 25 mm) wird bei einem Durchsatz von 4,0 kg/Std. eine Mischung aus 95,0 Masse % eines Polypropylen-Homopolymers A1) (Schmelzindex 2,4 g/10 min bei 230°C/2,16 kp, stabilisiert durch 0,1 Masse% Tetrakis[methylen(3,5-di-tert.butylhydroxyhydrocinnamat)]methan und 0,1 Masse% Tris(2,4-di-tert.butylphenyl)phosphit) und 5,0 Masse % eines modifizierten Propylenpolymers B3) [Gehalt an gebundenem Vinyltriethoxysilan 1,1%, Schmelzindex 1,05 g/10 min bei 230°C/2,16 kp, Gleichgewichtskomplianz Jₑ₀ 2,15 x 10⁻³ Pa⁻¹ (Kriechversuch in Kegel-Platte-Geometrie bei 230°C), Kristallisationspunkt (DSC) von 131°C] aufgeschmolzen, bei einer Massetemperatur von 245°C und einer Verweilzeit von 30 s homogenisiert, über zwei Runddüsen ausgetragen, als zwei 3mm-dicke Stränge abgezogen und nach Erstarrung im Wasserbad granuliert. Das Granulat besitzt einen Schmelzindex von 2,1 g/10 min bei 230°C/2,16 kp.

### Herstellung der Polyolefin-Spritzgußformteile :

Das hergestellte Granulat wird in einer Ferromatic-Millacron-Spritzgußmaschine, die eine Dreizonenschnecke mit einer Schneckenlänge von 22 D besitzt, bei einer Massetemperatur von 225°C und bei einer Werkzeugtemperatur von 50°C gemäß DIN 16774 zu Normspritzprüfstäben verarbeitet.

An den Normspritzprüfstäben wurden folgende Eigenschaften ermittelt :
Biege-E-Modul: 1708 MPa (23°C, ISO 178)
Kerbschlagzähigkeit nach Charpy : 6,55 kJ/m² (23°C, ISO 179 1eA)
Kristallisationspunkt (DSC, ISO 3146): 127,8°C

### Beispiel 16 (nicht erfindungsgemäß)

### Herstellung des modifizierten Propylenpolymeren B1):

Im Innenmischer wird auf ein pulverförmiges Polypropylen-Homopolymer (Schmelzindex 0,9 g/10 Min. bei 230°C/2,16 kg, mittlerer Korndurchmesser 0,2 mm) o,15 Masse% 2,6-Dicyclopentyl-4-methylphenol und 0,15 Masse% Bis-2,2,6,6-tetramethyl-4-piperidylsebazat aufgetrommelt und das Gemisch durch Inertgas pneumatisch in einen Kassettenreaktor o,2o x 3,5o m mit 4 integrierten Kathoden eines Niederenergiebeschleunigers vom Bandstrahlertyp (Energie 25o keV, Strahlleistung 4 x 1o KW ) und integrierter Vibrationseinrichtung gefördert, der Durchsatz bei einer Bestrahlungstemperatur von 85°C beträgt 3,1 kg/Minute.

Die bestrahlte pulverförmige Mischung wird in einem Werner&Pfleiderer - Doppelschneckenextruder ZSK 54 unter Zusatz von 0,1 Masse% Tetra-kis[me-thylen(3,5-di-tert.butylhydroxyhydrocinnamat)]methan und 0,1 Masse% Tris-(2,4-di-tert.butylphenyl)phosphit unter inerten Bedingungen bei 235°C granuliert. Das partiell modifizierte Polypropylengemisch besitzt einen Schmelzindex von 3,9 g/10 Min. bei 230°C/2,16 kg und einen Kristallisationspunkt (DSC, ISO 3146) von 126,5°C.

### Herstellung der Blends aus nichtmodifizierten Propylenpolymeren A) und modifizierten Propylenpolymeren B) :

In einem Collin-Labordoppelschneckenextruder (Schneckendurchmesser 25 mm) wird bei einem Durchsatz von 4,0 kg/Std. eine Mischung aus 78,0 Masse % eines Polypropylen-Homopolymers A1) (Schmelzindex 2,4 9/10 min bei 230°C/2,16 kp, stabilisiert durch 0,1 Masse% Tetrakis[methylen(3,5-di-tert.butylhydroxyhydrocinnamat)]methan und 0,1 Masse% Tris(2,4-di-tert.butylphenyl)phosphit) und 22,0 Masse % eines partiell modifizierten Polypropylengemischs [Schmelzindex 3,9 g/10 Min. bei 230°C/2,16 kg, Kristallisationspunkt (DSC) 126,5°C] aufgeschmolzen, bei einer Massetemperatur von 240°C und einer Verweilzeit von 28 s homogenisiert, über zwei Runddüsen ausgetragen, als zwei 3mm-dicke Stränge abgezogen und nach Erstarrung im Wasserbad granuliert. Das Granulat besitzt einen Schmelzindex von 2,4 g/10 min bei 230°C/2,16 kp.

### Herstellung der Polyolefin-Spritzgußformteile :

Das hergestellte Granulat wird in einer Ferromatic-Millacron-Spritzgußmaschine, die eine Dreizonenschnecke mit einer Schneckenlänge von 22 D besitzt, bei einer Massetemperatur von 225°C und bei einer Werkzeugtemperatur von 50°C gemäß DIN 16774 zu Normspritzprüfstäben verarbeitet.

An den Normspritzprüfstäben wurden folgende Eigenschaften ermittelt:
Biege-E-Modul: 1797 MPa (23°C, ISO 178)
Kerbschlagzähigkeit nach Charpy: 5,54 kJ/m² (23°C, ISO 179 1eA)
Kristallisationspunkt (DSC, ISO 3146): 126,5°C

## Patentansprüche

1. Durch Blasformen oder Spritzgießen hergestellte Polyolefinformteile verbesserter Wärmeformbeständigkeit und Steifigkeit aus 60 bis 99,9 Masse% nichtmodifizierten Polypropylenpolymeren A und 40 bis 0,1 Masse% modifizierten Propylenpolymeren B, wobei die nichtmodifizierten Propylenpolymere A aus
A1) üblichen Propylenpolymeren, bevorzugt unter Anwendung von Ziegler-Natta-Katalysatoren oder Metallocenkatalysatoren hergestellten Propylenhomopolymeren, insbesondere mit einem M_{w}/Mₙ-Verhältnis von 2 bis 4,5, und/oder Copolymeren aus Propylen, Ethylen und/oder α-Olefinen mit 4 bis 18 C-Atomen mit einem Propylengehalt von 80,0 bis 99,9 Masse% in Form von statistischen Copolymeren, Blockcopolymeren und/oder statistischen Blockcopolymeren, mit Schmelzindices von 0,1 bis 300 g/10 min bei 230 °C/2,16 kg und/oder
A2) einer Polyolefinmischung mit einem M_{w}/Mₙ-Verhältnis von 2 bis 6 und einem Schmelzindex von 1 bis 40 g/10 min bei 230 °C/2,16 kp, die aus
A2.1) 60 bis 98 Masse% eines kristallinen Copolymeren aus 85 bis 99,5 Masse% Propylen und 15 bis 0,5 Masse% Ethylen und/oder einem α-Olefin der allgemeinen Formel CH₂=CHR, wobei R ein linearer oder verzweigter Alkylrest mit 2 bis 8 Kohlenstoffatomen ist,
A2.2) 2 bis 40 Masse% eines elastischen Copolymers aus 20 bis 70 Masse% Ethylen und 80 bis 30 Masse% Propylen und/oder einem α-Olefin der allgemeinen Formel CH₂=CHR, wobei R ein linearer oder verzweigter Alkylrest mit 2 bis 8 Kohlenstoffatomen ist besteht und/oder
A3) weitgehend amorphen Polypropylenen oder Propylen-Copolymeren mit einem Anteil an kristallinem Polypropylen bzw. kristallinem Propylen-Copolymer unter 10 Masse% mit einer Schmelzenthalpie unter 40 J/g und einem Schmelzindex von 0,1 bis 100 g/10 min bei 230 °C/2,16 kg, wobei das weitgehend amorphe Polypropylen ein Homopolymer des Propylens und/oder ein Copolymer des Propylens aus mindestens 80 Mol % Propylen und höchstens 20 Mol % eines oder mehrerer α-Olefine der allgemeinen Formel CH₂=CHR ist, wobei R ein linearer oder verzweigter Alkylrest mit 2 bis 8 Kohlenstoffatomen ist,
bestehen,
wobei die nichtmodifizierten Propylenpolymere A 0,01 bis 2,5 Masse% Stabilisatoren, 0,01 bis 5 Masse% Verarbeitungshilfsmittel und gegebenenfalls 0,1 bis 1 Masse% Antistatika, 0,2 bis 3 Masse% Pigmente, 0,05 bis 1 Masse% Nukleierungsmittel, 2 bis 20 Masse% Flammschutzmittel, jeweils bezogen auf die Summe der nichtmodifizierten Propylenpolymere A, als Hilfsstoffe, und/oder gegebenenfalls 3 bis 40 Masse%, bezogen auf die Summe der nichtmodifizierten Propylenpolymere A, anorganische und/oder organische Füll- und/oder Verstärkungsstoffe enthalten,
**dadurch gekennzeichnet, dass** die modifizierten Propylenpolymere B modifizierte Propylenhomopolymere und/oder Propylencopolymere mit Schmelzindices von 0,05 bis 40 g/10 min bei 230 °C/2,16 kg und einem Quotienten aus der Grenzviscosität des modifizierten Propylenpolymers B und der Grenzviscosität des zugrundeliegenden nichtmodifizierten Propylenpolymers mit weitgehend gleichem Molmassen-Gewichtsmittel von 0,20 bis 0,95 sind,
wobei die modifizierten Propylenpolymere B
B1) modifizierte Propylenpolymere, die durch Behandlung von Propylenhomopolymeren und/oder Copolymeren aus Propylen und Ethylen bzw. α-Olefinen mit 4 bis 18 C-Atomen sowie von Mischungen der genannten Polypropylene
- mit mehrfunktionell ethylenisch ungesättigten Monomeren und
- mit ionisierender Strahlung bzw. thermisch zerfallenden Radikalbildner hergestellt wurden,
und/oder
B2) modifizierte Propylenpolymere, die durch Umsetzung von Säure- und/oder Säureanhydridgruppen enthaltenden Polypropylenen, mit C₂- bis C₁₆-Diaminen und/oder C₂ bis C₁₆-Diolen, hergestellt wurden, und/oder
B3) modifizierte Propylenpolymere, die durch hydrolytische Kondensation von Polypropylenen, die hydrolysierbare Silangruppen enthalten, hergestellt wurden, sind.

2. Polyolefinformteile nach Anspruch 1, **dadurch gekennzeichnet, dass** sie aus 75 bis 98 Masse% nichtmodifizierten Polypropylenpolymeren A und 25 bis 2 Masse% modifizierten Polypropylenpolymeren B bestehen.

3. Polyolefinformteile nach Anspruch 1, **dadurch gekennzeichnet, dass** die durch Behandlung von Propylen-Homopolymeren und/oder Copolymeren aus Propylen und Ethylen bzw. α-Olefinen mit 4 bis 18 C-Atomen sowie von Mischungen der genannten Polypropylene mit mehrfunktionell ethylenisch ungesättigten Monomeren und thermisch zerfallenden Radikalbildner modifizierten Propylenpolymere B1 nach einem kontinuierlichen Verfahren hergestellte modifizierte Propylenpolymere sind, bei dem
1) Polypropylenpartikel in Form von Pulvern, Granulaten oder Grießen mit einer bevorzugten Korngröße im Bereich von 0,001 bis 7 mm, die aus
1.1) Propylen-Homopolymeren, insbesondere aus Propylen-Homopolymeren mit bimodaler Molmassenverteilung, Molmassen-Gewichtsmitteln M_{w} von 500000 bis 1500000 g/mol, Molmassen-Zahlenmitteln Mₙ von 25000 bis 100000 g/mol und M_{w}/Mₙ-Werten von 5 bis 60, die in einer Reaktorkaskade unter Einsatz von Ziegler-Natta-Katalysatoren oder Metallocenkatalysatoren hergestellt wurden, und/oder aus
1.2) Copolymeren aus Propylen und Ethylen bzw. α-Olefinen mit 4 bis 18 C-Atomen, bevorzugt aus statistischen Propylen-Copolymeren, Propylen-Blockcopolymeren, statistischen Propylen-Blockcopolymeren und/oder elastomeren Polypropylenen, oder aus Mischungen der genannten modifizierten Polypropylene, bestehen, in einem kontinuierlichen Mischer mit 0,05 bis 3 Masse%, bezogen auf die eingesetzten Polypropylene, an Acylperoxiden, Alkylperoxiden, Hydroperoxiden, Peroxycarbonaten und/oder Perestem als thermisch zerfallende Radikalbildner, deren thermischer Zerfall bevorzugt unterhalb 210 °C abgeschlossen ist und die gegebenenfalls mit inerten Lösungsmitteln verdünnt sind, unter Erwärmung auf 30 bis 100 °C, bevorzugt auf 70 bis 90 °C, gemischt worden sind,
2) leichtflüchtige bifunktionelle Monomere, insbesondere C₄- bis C₁₀-Diene und/oder C₇- bis C₁₀-Divinylverbindungen, durch die Polypropylenpartikel aus der Gasphase, bevorzugt in kontinuierlichen Durchflussmischem als kontinuierliche Gas-Feststoff-Absorber, bei einer Temperatur T von 20 °C bis 120°C, vorzugsweise von 60 bis 100 °C, und einer mittleren Sorptionszeit von τₛ von 10 s bis 1000 s, bevorzugt 60 s bis 600 s, sorbiert worden sind, wobei in den Polypropylenpartikeln der Anteil der bifunktionell ungesättigten Monomeren 0,01 bis 10 Masse%, bevorzugt 0,05 bis 2 Masse%, bezogen auf die eingesetzten Polypropylene, beträgt, nachfolgend
3) die Polypropylenpartikel, in denen die Acylperoxide, Alkylperoxide, Hydroperoxide, Peroxycarbonate und/oder Perester als thermisch zerfallende Radikalbildner und die bifunktionell ungesättigten Monomere sorbiert worden sind, unter einer Atmosphäre aus Inertgas und diesen leichtflüchtigen bifunktionellen Monomeren bei 110 °C bis 210 °C in kontinuierlich arbeitenden Knetern oder Extrudern, vorzugsweise in Doppelschneckenextrudern, aufgeschmolzen worden sind und die thermisch zerfallenden Radikalbildner dabei zersetzt worden sind,
4) die Schmelze danach auf 220 °C bis 300 °C erwärmt worden ist, wobei nichtumgesetzte Monomere und Zerfallsprodukte entfernt worden sind, und
5) die Schmelze in an sich bekannter Weise granuliert worden ist,
und bei dem vor dem Verfahrensschritt 1) und/oder 5) und/oder vor bzw. während des Verfahrensschrittes 3) und/oder 4) als weitere Hilfsstoffe 0,01 bis 2,5 Masse% Stabilisatoren, 0,1 bis 1 Masse% Antistatika, 0,2 bis 3 Masse% Pigmente, 0,05 bis 1 Masse% Nukleierungsmittel und/oder 0,01 bis 5 Masse% Verarbeitungshilfsmittel, bezogen auf das eingesetzte Polypropylen, zugesetzt worden sind.

4. Polyolefinformteile nach einem oder mehreren der Ansprüche 1 bis 3, **dadurch gekennzeichnet, dass** die modifizierten Propylenpolymere B modifizierte Propylenpolymere mit einem Molmassen-Gewichtsmittel von 350 bis 1500 kg/mol und einer Gleichgewichtskomplianz Jₑₒ von 1,2 bis 12 Pa⁻¹ sind.

5. Polyolefinformteile nach einem oder mehreren der Ansprüche 1 bis 4, **dadurch gekennzeichnet, dass** die durch Blasformen hergestellten Polyolefinformteile Flaschen, Dosen, Flüssigkeitsbehälter, Flüssigkeitszuführungsteile, Luftführungsteile, Innenbehälter, Tanks, Faltenbälge, Abdeckungen, Gehäuse, Stutzen, Rohre und/oder Transportkoffer, bevorzugt großvolumige blasgeformte Polyolefinformteile mit Volumina von 5 bis 200 l, oder geschäumte Polyolefinformteile mit Schaumdichten von 300 bis 700 kg/m³ sind.

6. Verfahren zur Herstellung von Polyolefinformteilen verbesserter Wärmeformbeständigkeit und Steifigkeit durch Aufschmelzen und Homogenisieren von Mischungen aus 60 bis 99,9 Masse% nichtmodifizierten Propylenpolymeren A und 40 bis 0,1 Masse% modifizierten Propylenpolymeren B in Knetern, bevorzugt in Plastifiziereinheiten unter Einsatz von Schnecken mit UD von 15 bis 33, bei Temperaturen von 180 bis 300 °C, wobei die schmelzflüssigen Mischungen
1) durch Ringdüsen als schlauchförmiger Vorformling extrudiert, durch Ausblasen in einem auf 10 bis 55 °C temperierten geteilten Blaswerkzeug zum Hohlkörper umgeformt und gegebenenfalls in einem zweiten Blaswerkzeug einer zusätzlichen Längsverstreckung durch einen Streckstempel und einer weiteren radialen Verstreckung durch Blasluft unterzogen werden, oder
2) in ein auf 20 bis 130 °C temperiertes Spritzgießwerkzeug zur Herstellung des Vorformlings eingespritzt und nach Entnahme, gegebenenfalls bevorzugt unter separater Temperierung des Vorformlings in einem Konditionierungswerkzeug auf Temperaturen von 80 bis 160 °C, insbesondere unter einer ersten Vorformung durch Ausblasen, in das Blaswerkzeug überführt und durch Ausblasen zum Hohlkörper, gegebenenfalls bevorzugt unter zusätzlicher Längsverstreckung durch einen Streckstempel, umgeformt werden, oder
3) in Spritzgussmaschinen, bevorzugt mit Dreizonenschnecken einer Schneckenlänge von 18 bis 24 D, gegebenenfalls nach erfolgter Abkühlung und Granulierung, bei Massetemperaturen von 200 bis 300 °C, bevorzugt 240 bis 270 °C, hohen Einspritzgeschwindigkeiten und bei Werkzeugtemperaturen von 5 bis 70 °C, bevorzugt 20 bis 50 °C, zu Spritzgussformteilen verarbeitet werden,
und wobei die nichtmodifizierten Propylenpolymere A aus
A1) üblichen Propylenpolymeren, bevorzugt unter Anwendung von Ziegler-Natta-Katalysatoren oder Metallocenkatalysatoren hergestellten Propylenhomopolymeren, insbesondere mit einem M_{w}/Mₙ-Verhältnis von 2 bis 4,5, und/oder Copolymeren aus Propylen, Ethylen und/oder α-Olefinen mit 4 bis 18 C-Atomen mit einem Propylengehalt von 80,0 bis 99,9 Masse% in Form von statistischen Copolymeren, Blockcopolymeren und/oder statistischen Blockcopolymeren, mit Schmelzindices von 0,1 bis 300 g/10 min bei 230 °C/2,16 kg, und/oder
und/oder Copolymeren aus Propylen und Ethylen bzw. α-Olefinen mit 4 bis 18 C-Atomen sowie von Mischungen der genannten Polypropylene
- mit mehrfunktionell ethylenisch ungesättigten Monomeren und
- mit ionisierender Strahlung bzw. thermisch zerfallenden Radikalbildnern hergestellt wurden,
und/oder
B2) modifizierte Propylenpolymere, die durch Umsetzung von Säure- und/oder Säureanhydridgruppen enthaltenden Polypropylenen, mit C₂₋ bis C₁₆-Diaminen und/oder C₂ bis C₁₆-Diolen, hergestellt wurden, und/oder
B3) modifizierte Propylenpolymere, die durch hydrolytische Kondensation von Polypropylenen, die hydrolysierbare Silangruppen enthalten, hergestellt wurden, sind.

7. Verwendung von durch Blasformen hergestellten Polyolefinformteilen nach einem oder mehreren der Ansprüche 1 bis 5 in der Verpackungsindustrie, insbesondere zur Verpackung von Lebensmitteln, Haushaltschemikalien, Ölen, Kosmetika und Pharmazeutika, in der Kraftfahrzeugindustrie, in der Haushaltsgeräteindustrie, im Labor- und Krankenhausbedarf und für Garten- und Landwirtschaftsgeräte.

8. Verwendung von durch Spritzgießen hergestellten Polyolefinformteilen nach einem oder mehreren der Ansprüche 1 bis 5 für Verpackungen, bevorzugt für Pharmaverpackungen und Lebensmittelverpackungen, Transportbehälter sowie für Bauteile in der Automobilindustrie, Bauteile von Maschinen, Haushaltsgeräten, Elektrogeräten und Elektronikgeräten.

## Claims

1. Polyolefin molded articles manufactured by blow molding or injection molding which have an improved heat deflection temperature and stiffness and are made of 60 to 99.9 % by weight of unmodified polypropylene polymers A and 40 to 0.1 % by weight of modified polypropylene polymers B, the unmodified polypropylene polymers A consisting of
A1 ) usual propylene polymers, preferably propylene homopolymers manufactured by using Ziegler-Natta catalysts or metallocene catalysts, which specifically have an M_{w}/Mₙ ratio of 2 to 4.5, and/or copolymers of propylene, ethylene and/or α-olefins having 4 to 18 C-atoms, which have a propylene content of 80.0 to 99.9 % by weight, in the form of random copolymers, block copolymers and/or random block copolymers having melt indices of 0.1 to 300 g/10 min at 230 °C/2.16 kg; and/or
A2) a polyolefin mixture having an M_{w}/Mₙ ratio of 2 to 6 and a melt index of 1 to 40 g/10 min at 230 °C/2.16 kg which consists of
A2.1) 60 to 98 % by weight of a crystalline copolymer of 85 to 99.5 % by weight of propylene and 15 to 0.5 % by weight of ethylene and/or an α-olefin of the general formula CH₂=CHR, where R is a linear or branched alkyl residue having 2 to 8 carbon atoms;
A2.2) 2 to 40 % by weight of an elastic copolymer consisting of 20 to 70 % by weight of ethylene and 80 to 30 % by weight of propylene and/or an α-olefin of the general formula CH₂=CHR, where R is a linear or branched alkyl residue having 2 to 8 carbon atoms; and/or
A3) substantially amorphous polypropylenes or propylene copolymers having a content of crystalline polypropylene or crystalline propylene copolymer of less than 10 % by weight having an enthalpy of melting of less than 40 J/g and a melt index of 0.1 to 100 g/10 min at 230 °C/2.16 kg, the substantially amorphous polypropylene being a homopolymer of the propylene and/or a copolymer of the propylene of at least 80 mole % of propylene and not more than 20 mole % of one or more α-olefins of the general formula CH₂=CHR, where R is a linear or branched alkyl residue having 2 to 8 carbon atoms,
wherein the unmodified propylene polymers A contain 0.01 to 2.5 % by weight of stabilizers, 0.01 to 5 % by weight of processing agents and, if required, 0.1 to 1 % by weight of antistatics, 0.2 to 3 % by weight of pigments, 0.05 to 1 % by weight of nucleation agents, 2 to 20 % by weight of flameproofing agents, each related to the sum of the unmodified propylene polymers A, as auxiliary agents, and/or contain, if required, 3 to 40 % by weight, related to the sum of the unmodified propylene polymers A, of inorganic and/or organic filling and/or reinforcing agents,
**characterized in that** the modified propylene polymers B are modified propylene homopolymers and/or propylene copolymers having melt indices of 0.05 to 40 g/10 min at 230 °C/2.16 kg and a quotient of the intrinsic viscosity of the modified propylene polymer B and of the intrinsic viscosity of the underlying unmodified propylene polymer having substantially the same molar-mass weight average, of 0.20 to 0.95,
wherein the modified propylene polymers B are
B1) modified propylene polymers manufactured by treating propylene homopolymers and/or copolymers of propylene and ethylene or α-olefins having 4 to 18 C-atoms as well as mixtures of the above polypropylenes
- with polyfunctionally ethylenically unsaturated monomers and
- with ionizing radiation or thermally decomposing radical formers
and/or
B2) modified propylene polymers manufactured by converting polypropylenes containing acid residues and/or acid anhydride residues with C₂- to C₁₆-diamines and/or C₂- to C₁₆-diols;
and/or
B3) modified propylene polymers manufactured by hydrolytic condensation of polypropylenes containing hydrolysable silane groups.

2. The polyolefin molded articles of Claim 1, wherein they consist of 75 to 98 % by weight of unmodified polypropylene polymers A and 25 to 2 % by weight of modified polypropylene polymers B.

3. The polyolefin molded articles of Claim 1, wherein the propylene polymers B1 modified by treating propylene homopolymers and/or copolymers of propylene and ethylene or α-olefins having 4 to 18 C-atoms as well as mixtures of the above polypropylenes with polyfunctionally ethylenically unsaturated monomers and thermally decomposing radical formers are modified propylene polymers manufactured by a continuous process in which
1) polypropylene particles in the form of powders, granulates or grits having a preferred particle size ranging from 0.001 to 7 mm, which consist of
1.1) propylene homopolymers, specifically of propylene homopolymers having a bimodal molar-mass distribution, molar-mass weight averages M_{w} of 500,000 to 1,500,000 g/mole, molar-mass numerical averages Mₙ of 25,000 to 100,000 g/mole and M_{w}/Mₙ values of 5 to 60, which were manufactured by the use of Ziegler-Natta catalysts or metallocene catalysts in a series of reactors; and/or consist of
1.2) copolymers of propylene and ethylene or α-olefins having 4 to 18 C-atoms, preferably of random propylene copolymers, propylene block copolymers, random propylene block copolymers and/or elastomeric polypropylenes, or of mixtures of the above modified polypropylenes, have been mixed in a continuous mixer with 0.05 to 3 % by weight, related to the polypropylenes charged, of acyl peroxides, alkyl peroxides, hydroperoxides, peroxycarbonates and/or peresters as thermally decomposing radical formers whose thermal decomposition is completed preferably below 210 °C and which have been diluted with inert solvents if required, while heating to 30 to 100 °C, preferably 70 to 90 °C;
2) highly volatile bifunctional monomers, specifically C₄- to C₁₀-dienes and/or C₇- to C₁₀-divinyl compounds, have been sorbed by the polypropylene particles from the gas phase, preferably in continuous tank-type flow reactors as continuous gas-solid absorbers, at a temperature T of 20 to 120 °C, preferably 60 to 100 °C, and a mean sorption time τₛ of 10 to 1000 sec, preferably 60 to 600 sec, the content of the bifunctionally unsaturated monomers in the polypropylene particles being 0.01 to 10 % by weight, preferably 0.05 to 2 % by weight, related to the polypropylenes charged; subsequently
3) the polypropylene particles in which the acyl peroxides, alkyl peroxides, hydroperoxides, peroxycarbonates and/or peresters as thermally decomposing radical formers and the bifunctionally unsaturated monomers had been sorbed have been melted in an atmosphere of inert gas and of said highly volatile bifunctional monomers at 110 to 210 °C in continuous kneaders or extruders, preferably in twinscrew extruders, and the thermally decomposing radical formers have been decomposed at the same time;
4) the melt has subsequently been heated to 220 to 300 °C, unreacted monomers and decomposition products having been removed; and
5) the melt has been granulated in.a manner known per se;
and in which 0.01 to 2.5 % by weight of stabilizers, 0.1 to 1 % by weight of antistatics, 0.2 to 3 % by weight of pigments, 0.05 to 1 % by weight of nucleation agents and/or 0.01 to 5 % by weight of processing agents, related to the polypropylene charged, have been added as further auxiliary agents before process step 1) and/or 5) and/or before or during process step 3) and/or 4).

4. The polyolefin molded articles of one or more of Claims 1 to 3, wherein the modified propylene polymers B are modified propylene polymers having a molar-mass weight average of 350 to 1500 kg/mole and an equilibrium compliance Jₑₒ of 1.2 to 12 Pa⁻¹.

5. The polyolefin molded articles of one or more of Claims 1 to 4, wherein the polyolefin molded articles manufactured by blow molding are bottles, cans, liquid containers, liquid feeding parts, air ducting parts, inner containers, tanks, corrugated bellows, covers, cases, pipe connections, tubes and pipes and/or transport trunks, preferably large-volume blow-molded polyolefin molded articles having volumes of 5 to 200 I, or expanded polyolefin molded articles having foam densities of 300 to 700 kg/m³.

6. A method of manufacturing polyolefin molded articles of improved heat deflection temperature and stiffness by melting and homogenizing mixtures of 60 to 99.9 % by weight of unmodified propylene polymers A and 40 to 0.1 % by weight of modified propylene polymers B in kneaders, preferably in plasticizing units using screws having an UD ratio of 15 to 33, at temperatures of 180 to 300 °C, wherein the molten mixtures
1) are extruded as a tubular parison through tubular dies, are formed into a hollow part by blowing out in a split blow mold brought to a temperature of 10 to 55 °C and, if required, are subjected to an additional longitudinal drawing process by means of a drawing male mold in a second blow mold and to another radial drawing process by means of blow air; or
2) are injected into an injection mold brought to a temperature of 20 to 130 °C to make the parison and are transferred into the blow mold after they have been removed, preferably by separately bringing the parison to a temperature of 80 to 160 °C in a conditioning mold if required, specifically by a first premolding process by blowing out, and are formed into a hollow part by blowing out, preferably by an additional longitudinal drawing process by means of a drawing male mold if required; or
3) are processed into injection-molded articles in injection molding machines, preferably having three-section screws of a screw length of 18 to 24 D, after the mixtures have been cooled down and granulated if required, at mass temperatures of 200 to 300 °C, preferably 240 to 270 °C, at high injections rates and at mold temperatures of 5 to 70 °C, preferably 20 to 50 °C;
and wherein the unmodified propylene polymers A consist of
A1 ) usual propylene polymers, preferably propylene homopolymers manufactured by using Ziegler-Natta catalysts or metallocene catalysts, which specifically have an M_{w}/Mₙ ratio of 2 to 4.5, and/or copolymers of propylene, ethylene and/or α-olefins having 4 to 18 C-atoms, which have a propylene content of 80.0 to 99.9 % by weight, in the form of random copolymers, block copolymers and/or random block copolymers having melt indices of 0.1 to 300 g/10 min at 230 °C/2.16 kg and/or
A2) a polyolefin mixture having an M_{w}/Mₙ ratio of 2 to 6 and a melt index of 1 to 40 g/10 min at 230 °C/2.16 kg which consists of
A2.1) 60 to 98 % by weight of a crystalline copolymer of 85 to 99.5 % by weight of propylene and 15 to 0.5 % by weight of ethylene and/or an α-olefin of the general formula CH₂=CHR, where R is a linear or branched alkyl residue having 2 to 8 carbon atoms;
A2.2) 2 to 40 % by weight of an elastic copolymer consisting of 20 to 70 % by weight of ethylene and 80 to 30 % by weight of propylene and/or an α-olefin of the general formula CH₂=CHR, where R is a linear or branched alkyl residue having 2 to 8 carbon atoms; and/or
A3) substantially amorphous polypropylenes or propylene copolymers having a content of crystalline polypropylene or crystalline propylene copolymer of less than 10 % by weight having an enthalpy of melting of less than 40 J/g and a melt index of 0.1 to 100 g/10 min at 230 °C/2.16 kg, the substantially amorphous polypropylene being a homopolymer of the propylene and/or a copolymer of the propylene of at least 80 mole % of propylene and not more than 20 mole % of one or more α-olefins of the general formula CH₂=CHR, where R is a linear or branched alkyl residue having 2 to 8 carbon atoms,
and wherein the unmodified propylene polymers A contain 0.01 to 2.5 % by weight of stabilizers, 0.01 to 5 % by weight of processing agents and, if required, 0.1 to 1 % by weight of antistatics, 0.2 to 3 % by weight of pigments, 0.05 to 1 % by weight of nucleation agents, 2 to 20 % by weight of flameproofing agents, each related to the sum of the unmodified propylene polymers A, as auxiliary agents, and/or contain, if required, 3 to 40 % by weight, related to the sum of the unmodified propylene polymers A, of inorganic and/or organic filling and/or reinforcing agents,
**characterized in that** the modified propylene polymers B are modified propylene homopolymers and/or propylene copolymers having melt indices of 0.05 to 40 g/10 min at 230 °C/2.16 kg and a quotient of the intrinsic viscosity of the modified propylene polymer B and of the intrinsic viscosity of the underlying unmodified propylene polymer having substantially the same molar-mass weight average, of 0.20 to 0.95,
wherein the modified propylene polymers B are
B1) modified propylene polymers manufactured by treating propylene homopolymers and/or copolymers of propylene and ethylene or α-olefins having 4 to 18 C-atoms as well as mixtures of the above propylenes
- with polyfunctionally ethylenically unsaturated monomers and
- with ionizing radiation or thermally decomposing radical formers
and/or
B2) modified propylene polymers manufactured by converting polypropylenes containing acid residues and/or acid anhydride residues with C₂- to C₁₆-diamines and/or C₂- to C₁₆-diols;
and/or
B3) modified propylene polymers manufactured by hydrolytic condensation of polypropylenes containing hydrolysable silane groups.

7. Use of polyolefin molded articles made by blow molding of one ore more of Claims 1 to 5 in the packaging industry, specifically for packaging food, domestic chemicals, oils, cosmetics and pharmaceuticals, in the automotive industry, in the household appliances industry, in laboratory and hospital supplies and for gardening implements and agricultural equipment.

8. Use of polyolefin molded articles made by injection molding of one ore more of Claims 1 to 5 for packages, preferably for pharmaceutical packages and food packages, transfer containers as well as for components in the automotive industry, components of machines, of household appliances, of electrical equipment and of electronic devices.

## Revendications

1. Eléments formés en polyoléfines, réalisés par moulage par soufflage ou par moulage par injection et ayant une résistance à la déformation par la chaleur et une rigidité améliorées, à partir de 60 à 99,9 % en poids de polymères A non modifiés du propylène et de 40 à 0,1 % en poids de polymères B modifiés du propylène, où les polymères A non modifiés du propylène sont choisis parmi
A1 ) les polymères usuels du propylène et, de préférence, les homopolymères du propylène obtenus en faisant appel à des catalyseurs du type Ziegler-Natta ou à des catalyseurs du type métallocènes, en particulier avec un rapport M_{w} / Mₙ de 2 à 4,5 et / ou les copolymères du propylène, de l'éthylène et / ou d'α-oléfines ayant de 4 à 18 atomes de carbone, avec une teneur en propylène de 80,0 à 99,9 % en poids et se présentant sous la forme de copolymères statistiques, de copolymères bloc et / ou de copolymères bloc statistiques, avec des indices de fusion de 0,1 à 300 g / 10 min à 230 °C sous 2,16 kg et / ou
A2) les mélanges de polyoléfines avec un rapport M_{w} / Mₙ de 2 à 6 et un indice de fusion de 1 à 40 g / 10 min à 230 °C sous 2,16 kp, formés de
A2.1) 60 à 98 % en poids de copolymères cristallins constitués de 85 à 99,5 % en poids de propylène et de 15 à 0,5 % en poids d'éthylène et / ou d'une α-oléfine ayant la formule générale CH₂ = CHR, dans laquelle R est un résidu alkyle droit ou ramifié ayant de 2 à 8 atomes de carbone, et de
A2.2) 2 à 40 % en poids d'un copolymère élastique constitué de 20 à 70 % en poids d'éthylène et de 80 à 30 % en poids de propylène et / ou d'une α-oléfine ayant la formule générale CH₂ = CHR, dans laquelle R est un résidu alkyle droit ou ramifié ayant de 2 à 8 atomes de carbone et / ou
A3) les polypropylènes essentiellement amorphes et les copolymères du propylène essentiellement amorphes avec une proportion de polypropylène cristallin ou de copolymère du propylène cristallin, inférieure à 10 % en poids, une enthalpie de fusion inférieure à 40 J / g et un indice de fusion de 0,1 à 100 g /10 min à 230 °C sous 2,16 kg, où le polypropylène essentiellement amorphe est un homopolymère du propylène et / ou un copolymère du propylène contenant au moins 80 % en moles de propylène et au maximum 20 % en moles d'une ou de plusieurs α-oléfines ayant la formule générale CH₂ = CHR, dans laquelle R est un résidu alkyle droit ou ramifié ayant de 2 à 8 atomes de carbone,
ces polymères A non modifiés du propylène contenant, en tant qu'agents auxiliaires, de 0,01 à 2,5 % en poids de stabilisants, de 0,01 à 5 % en poids d'un adjuvant de fabrication et, le cas échéant, de 0,1 à 1 % en poids d'agents antistatiques, de 0,2 à 3 % en poids de pigments, de 0,05 à 1 % en poids d'agent de nucléation, de 2 à 20 % en poids d'agent ignifuge (tous ces pourcentages sont donnés par rapport au total des polymères A non modifiés du propylène) et / ou, le cas échéant, de 3 à 40 % en poids (par rapport au total des polymères A non modifiés du propylène) de charges et / ou d'agents de renforcement inorganiques et / ou organiques, **caractérisés en ce que** les polymères B modifiés du propylène sont des homopolymères modifiés du propylène et / ou des copolymères modifiés du propylène avec des indices de fusion de 0,05 à 40 g / 10 min à 230 °C sous 2,16 kg et avec un quotient de la viscosité limite du polymère B modifié du propylène sur la viscosité limite du polymère du propylène de base non modifié et ayant sensiblement un poids moléculaire moyen en poids équivalent, de 0,20 à 0,95,
et où les polymères B modifiés du propylène sont choisis parmi
B1) les polymères modifiés du propylène qui sont obtenus par le traitement d'homopolymères du propylène et / ou de copolymères du propylène et de l'éthylène ou d'α-oléfines ayant de 4 à 18 atomes de carbone, ainsi que de mélanges des polypropylènes susmentionnés,
- avec des monomères éthyléniquement insaturés polyfonctionnels et
- avec des radiations ionisantes ou avec un initiateur radicalaire décomposable par la chaleur,
et / ou
B2) les polymères modifiés du propylène, qui sont préparés par le traitement de polypropylènes contenant des groupes acides et / ou des groupes anhydrides d'acides avec des diamines en C₂ à C₁₆ et / ou avec des diols en C₂ à C₁₆
et / ou
B3) les polymères modifiés du propylène, qui sont préparés par la condensation hydrolytique de polypropylènes contenant des groupes silane hydrolysables.

2. Eléments formés en polyoléfines selon la revendication 1, **caractérisés en ce qu'**ils sont constitués de 75 à 98 % en poids de polymères A non modifiés du propylène et de 25 à 2 % en poids de polymères B modifiés du propylène.

3. Eléments formés en polyoléfines selon la revendication 1, **caractérisés en ce que** les polymères B1 du propylène - obtenus par le traitement d'homopolymères du propylène et / ou de copolymères du propylène et de l'éthylène ou d'une α-oléfine ayant de 4 à 18 atomes de carbone, ainsi que de mélanges des polypropylènes mentionnés, par des monomères éthyléniquement insaturés polyfonctionnels et par un initiateur radicalaire décomposable par la chaleur - sont des polymères modifiés du propylène, obtenus par un procédé continu, dans lequel
1) des particules de polypropylène sous la forme de poudres fines, de poudres plus grossières ou de granulés ayant une granulométrie préférée dans la plage de 0,001 à 7 mm,
1.1) qui sont constituées par des homopolymères du propylène et, en particulier, par des homopolymères du propylène avec une répartition bimodale du poids moléculaire, un poids moléculaire moyen en poids M_{w} de 500.000 à 1.500.000 g / mole, un poids moléculaire moyen en nombre Mₙ de 25.000 à 100.000 g / mole, un rapport M_{w} / Mₙ de 5 à 60 et qui sont préparés dans un réacteur en cascade en faisant appel à des catalyseurs du type Ziegler-Natta ou à des catalyseurs du type métallocènes et / ou
1.2) par des copolymères du propylène et de l'éthylène ou d'α-oléfines ayant de 4 à 18 atomes de carbone, de préférence des copolymères statistiques du propylène, des copolymères bloc du propylène, des copolymères bloc statistiques du propylène et / ou des polypropylènes élastomères ou par des mélanges des polypropylènes modifiés mentionnés, sont mélangées dans un mélangeur continu avec de 0,05 à 3 % en poids (par rapport aux polypropylènes mis en oeuvre) de peroxydes d'acyle, de peroxydes d'alkyle, d'hydroperoxydes, de percarbonates et / ou de peresters constituant l'initiateur radicalaire décomposable par la chaleur, dont la décomposition thermique est effective, de préférence, en dessous de 210 °C et qui est dilué, le cas échéant, avec des milieux solvants inertes, en chauffant à 30 - 100 °C et, de préférence, à 70 - 90 °C,
2) des monomères bifonctionnels très volatiles et, en particulier, des diènes en C₄ à C₁₀ et / ou des composés divinyle en C₇ à C₁₀ sont absorbés par les particules de polypropylène depuis la phase gazeuse, de préférence dans un mélangeur continu fonctionnant comme un absorbeur continu de la phase gazeuse par la phase solide, à une température T de 20 °C à 120 °C et, de préférence, de 60 à 100 °C et avec un temps d'absorption moyen τₛ de 10 s à 1.000 s et, de préférence, de 60 s à 600 s, la proportion des monomères insaturés bifonctionnels dans les particules de polypropylène étant de 0,01 à 10 % en poids et, de préférence, de 0,05 à 2 % en poids (par rapport aux polypropylènes mis en oeuvre),
3) ensuite, les particules de polypropylène dans lesquelles ont été absorbés les peroxydes d'acyle, les peroxydes d'alkyle, les hydroperoxydes, les percarbonates et / ou les peresters mis en oeuvre en tant qu'initiateur radicalaire décomposable par la chaleur, ainsi que les monomères insaturés bifonctionnels, sont fondues à 110 °C - 210 °C sous une atmosphère d'un gaz inerte et de ces monomères bifonctionnels très volatiles dans un malaxeur fonctionnant en continu ou dans une extrudeuse (de préférence, dans une extrudeuse à deux vis), ce qui permet de détruire l'initiateur radicalaire décomposable par la chaleur,
4) la masse fondue est ensuite chauffée à 220 °C - 300 °C, pour éliminer les monomères qui n'ont pas réagi et les produits de décomposition, et
5) la masse fondue est granulée de manière connue,
où avant l'étape 1) et / ou l'étape 5) et / ou avant ou durant l'étape 3) et / ou l'étape 4) du procédé, on ajoute, en tant qu'agent auxiliaire additionnel, de 0,01 à 2,5 % en poids de stabilisants, de 0,1 à 1 % en poids d'agents antistatiques, de 0,2 à 3 % en poids de pigments, de 0,05 à 1 % en poids d'agent de nucléation et / ou de 0,01 à 5 % en poids d'un adjuvant de fabrication (tous ces pourcentages sont donnés par rapport au polypropylène mis en oeuvre).

4. Eléments formés en polyoléfines selon une ou plusieurs des revendications 1 à 3, **caractérisés en ce que** les polymères B modifiés du propylène sont des polymères modifiés du propylène avec un poids moléculaire moyen en poids de 350 à 1.500 kg / mole et une compliance à l'équilibre Jₑₒ de 1,2 à 12 Pa⁻¹.

5. Eléments formés en polyoléfines selon une ou plusieurs des revendications 1 à 4, **caractérisés en ce que** lesdits éléments formés en polyoléfines obtenus par moulage par soufflage sont des bouteilles, des boîtes, des récipients pour des liquides, des conduites pour des liquides, des conduites pour l'air, des récipients internes, des réservoirs, des soufflets d'interconnexion, des revêtements, des enceintes, des éléments de support, des tubes et / ou des coffres de transport et, de préférence, des éléments formés en polyoléfines par moulage par soufflage ayant un volume important, en l'occurrence de 5 à 200 I ou des éléments formés en polyoléfines expansées avec un poids spécifique de la mousse de 300 à 700 kg / m³.

6. Procédé pour réaliser des éléments formés en polyoléfines ayant une résistance à la déformation par la chaleur et une rigidité améliorées, par la fusion et l'homogénéisation de mélanges de 60 à 99,9 % en poids de polymères A non modifiés du propylène et de 40 à 0,1 % en poids de polymères B modifiés du propylène, de préférence par malaxage, en mettant en oeuvre une unité de plastification faisant appel à des vis avec un rapport L / D de 15 à 33, à des températures de 180 à 300 °C, où les mélanges fondus
1) sont extrudés par une buse annulaire sous la forme d'un tube constituant une préforme, qui est formée par soufflage dans un dispositif de soufflage séparé et tempéré à 10 - 55 °C pour obtenir des corps creux, qui sont ensuite placés, le cas échéant, dans un second dispositif de soufflage pour y subir une extension additionnelle longitudinale par l'effet d'un piston d'étirage et une extension additionnelle radiale par l'effet d'une injection d'air ou
2) ils sont injectés dans un dispositif de moulage par injection tempéré à 20 - 130 °C pour obtenir des préformes qui - après leur évacuation et, le cas échéant et de préférence, un tempérage séparé, effectué dans un dispositif de conditionnement à une température de 80 à 160 °C - sont soumises, plus particulièrement, à un premier formage par soufflage dans un dispositif de soufflage pour obtenir des corps creux qui, le cas échéant et de préférence, sont soumis à une extension longitudinale additionnelle par l'effet d'un piston d'étirage ou
3) après éventuellement un refroidissement et une granulation adaptés, ils sont utilisés pour former des pièces moulées par injection dans une machine d'injection, comprenant, de préférence, une vis à trois zones avec une longueur de vis égale à 18 - 24 D, opérant avec une température de la masse fondue de 200 à 300 °C et, de préférence, de 240 à 270 °C, avec une vitesse d'injection élevée et avec une température du dispositif de moulage de 5 à 70 °C et, de préférence, de 20 à 50 °C,
et où les polymères A non modifiés du propylène sont choisis parmi
A1) les polymères usuels du propylène et, de préférence, les homopolymères du propylène obtenus en faisant appel à des catalyseurs du type Ziegler-Natta ou à des catalyseurs du type métallocènes, en particulier des polymères avec un rapport M_{w} / Mₙ de 2 à 4,5 et / ou les copolymères du propylène, de l'éthylène et / ou d'α-oléfines ayant de 4 à 18 atomes de carbone, avec une teneur en propylène de 80,0 à 99,9 % en poids et se présentant sous la forme de copolymères statistiques, de copolymères bloc et / ou de copolymères bloc statistiques, avec des indices de fusion de 0,1 à 300 g / 10 min à 230 °C sous 2,16 kg et / ou
A2) les mélanges de polyoléfines avec un rapport M_{w} / Mₙ de 2 à 6 et un indice de fusion de 1 à 40 g / 10 min à 230 °C sous 2,16 kg, formés de
A2.1) 60 à 98 % en poids d'un copolymère cristallin constitué de 85 à 99,5 % en poids de propylène et de 15 à 0,5 % en poids d'éthylène et / ou d'une α-oléfine ayant la formule générale CH₂ = CHR, dans laquelle R est un résidu alkyle droit ou ramifié ayant de 2 à 8 atomes de carbone,
A2.2) et de 2 à 40 % en poids d'un copolymère élastique constitué de 20 à 70 % en poids d'éthylène et de 80 à 30 % en poids de propylène et / ou d'une α-oléfine ayant la formule générale CH₂ = CHR, dans laquelle R est un résidu alkyle droit ou ramifié ayant de 2 à 8 atomes de carbone et / ou
A3) les polypropylènes essentiellement amorphes ou les copolymères du propylène essentiellement amorphes avec une proportion de polypropylène cristallin ou de copolymère du propylène cristallin inférieure à 10 % en poids, une enthalpie de fusion inférieure à 40 J / g et un indice de fusion de 0,1 à 100 g / 10 min à 230 °C sous 2,16 kg, où le polypropylène essentiellement amorphe est un homopolymère du propylène et / ou un copolymère du propylène contenant au moins 80 % en moles de propylène et au maximum 20 % en moles d'une ou de plusieurs α-oléfines ayant la formule générale CH₂ = CHR, dans laquelle R est un résidu alkyle droit ou ramifié ayant de 2 à 8 atomes de carbone,
ces polymères A non modifiés du propylène contenant, en tant qu'agents auxiliaires, de 0,01 à 2,5 % en poids de stabilisants, de 0,01 à 5 % en poids d'un adjuvant de fabrication et, le cas échéant, de 0,1 à 1 % en poids d'agents antistatiques, de 0,2 à 3 % en poids de pigments, de 0,05 à 1 % en poids d'agent de nucléation, de 2 à 20 % en poids d'agent ignifuge (tous ces pourcentages sont donnés par rapport au total des polymères A non modifiés du propylène) et / ou, le cas échéant, de 3 à 40 % en poids (par rapport au total des polymères A non modifiés du propylène) de charges et / ou d'agents de renforcement inorganiques et / ou organiques,
**caractérisé en ce que** les polymères B modifiés du propylène sont des homopolymères modifiés du propylène et / ou des copolymères modifiés du propylène avec des indices de fusion de 0,05 à 40 g / 10 min à 230 °C sous 2,16 kg et avec un quotient de la viscosité limite du polymère B modifié du propylène sur la viscosité limite du polymère du propylène de base non modifié et ayant sensiblement un poids moléculaire moyen en poids équivalent, de 0,20 à 0,95,
et où les polymères B modifiés du propylène sont choisis parmi
B1) les polymères modifiés du propylène qui sont obtenus par le traitement d'homopolymères du propylène et / ou de copolymères du propylène et de l'éthylène ou d'α-oléfines ayant de 4 à 18 atomes de carbone, ainsi que de mélanges des polypropylènes susmentionnés,
- avec des monomères éthyléniquement insaturés polyfonctionnels et
- avec des radiations ionisantes ou avec un initiateur radicalaire décomposable par la chaleur,
et / ou
B2) les polymères modifiés du propylène, qui sont préparés par le traitement de polypropylènes contenant des groupes acides et / ou des groupes anhydrides d'acides avec des diamines en C₂ à C₁₆ et / ou avec des diols en C₂ à C₁₆
et / ou
B3) les polymères modifiés du propylène, qui sont préparés par la condensation hydrolytique de polypropylènes contenant des groupes silane hydrolysables.

7. Utilisation d'éléments formés en polyoléfines, réalisés par moulage par soufflage selon une ou plusieurs des revendications 1 à 5 dans l'industrie de l'emballage, en particulier pour le conditionnement de produits alimentaires, de produits d'entretien domestiques, d'huiles, de produits cosmétiques et de produits pharmaceutiques, dans l'industrie automobile, dans l'industrie des appareils ménagers, des fournitures pour les hôpitaux et pour les laboratoires, ainsi que pour des équipements servant au jardinage ou dans l'agriculture.

8. Utilisation d'éléments formés en polyoléfine réalisés par moulage par injection selon une ou plusieurs des revendications 1 à 5, pour produire des emballages destinés, de préférence, au conditionnement de produits pharmaceutiques et de produits alimentaires, pour réaliser des récipients de transport et également des éléments destinés à l'industrie automobile, ainsi que des éléments de machines, d'appareils ménagers, d'appareils électriques et d'appareils électroniques.
